(19) Europäisches Patentamt / European Patent Office / Office européen des brevets

(11) **EP 3 154 681 B1**

(12) **FASCICULE DE BREVET EUROPEEN**

(45) Date de publication et mention de la délivrance du brevet:
**25.12.2019 Bulletin 2019/52**

(21) Numéro de dépôt: **15729405.9**

(22) Date de dépôt: **09.06.2015**

(51) Int Cl.:
*B01J 23/74* (2006.01)  *B01J 23/88* (2006.01)
*B01J 23/888* (2006.01)  *B01J 23/882* (2006.01)
*B01J 23/883* (2006.01)  *B01J 27/185* (2006.01)
*B01J 27/188* (2006.01)  *B01J 35/10* (2006.01)
*B01J 37/03* (2006.01)  *B01J 37/06* (2006.01)
*B01J 37/08* (2006.01)  *B01J 37/16* (2006.01)
*B01J 37/20* (2006.01)  *B01J 37/02* (2006.01)
*C01F 7/02* (2006.01)  *C01F 7/34* (2006.01)
*C10G 45/08* (2006.01)

(86) Numéro de dépôt international:
**PCT/EP2015/062820**

(87) Numéro de publication internationale:
**WO 2015/189194 (17.12.2015 Gazette 2015/50)**

(54) **CATALYSEUR MESOPOREUX ET MACROPOREUX D'HYDROCONVERSION DE RÉSIDUS ET MÉTHODE DE PRÉPARATION**

MESOPORÖSER UND MAKROPORÖSER KATALYSATOR ZUR WASSERSTOFFBEHANDUNG VON ÖLRÜCKSTÄNDEN UND DESSEN HERSTELLUNGSVERFAHREN

MESOPOROUS AND MACROPOROUS CATALYST FOR HYDROTREATING PETROLEUM RESIDUE AND PREPARATION METHOD THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1455417**

(43) Date de publication de la demande:
**19.04.2017 Bulletin 2017/16**

(73) Titulaire: **IFP Energies nouvelles**
**92500 Rueil-Malmaison (FR)**

(72) Inventeurs:
• **BOUALLEG, Malika**
**69100 Villeurbanne (FR)**
• **GUICHARD, Bertrand**
**38140 Izeaux (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 2 255 873**  **WO-A1-2005/028106**
**WO-A1-2013/032628**  **US-A- 5 478 791**
**US-A- 5 620 592**  **US-B1- 6 589 908**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique de l'invention**

L'invention concerne des catalyseurs d'hydrotraitement présentant une texture et une formulation favorables à l'hydrodémétallation (HDM), tout en conservant une activité en hydrodésulfuration (HDS) satisfaisante, leur préparation et leur utilisation. L'invention consiste en l'utilisation de catalyseurs mésoporeux et macroporeux supportés sur une matrice oxyde aluminique comprenant du molybdène, éventuellement au moins un métal du groupe VIII de la classification périodique des élément choisi parmi le cobalt et/ou le nickel, ainsi que l'élément phosphore. On a découvert que ce type de formulation associée à un support de propriétés texturales spécifiques permet, notamment dans les premiers lits catalytiques d'un procédé d'hydrotraitement de résidus, en lit fixe, mais aussi dans un procédé en lit bouillonnant, d'améliorer significativement l'activité en hydrodémétallation (HDM) et la stabilité dans le temps.

**Art antérieur**

Il est connu de l'Homme du métier que l'hydrotraitement catalytique permet, par la mise en contact d'une charge hydrocarbonée avec un catalyseur dont les propriétés, en termes de métaux de la phase active et de porosité, sont préalablement bien ajustées, de réduire sensiblement sa teneur en asphaltènes, métaux, soufre et autres impuretés tout en améliorant le rapport hydrogène sur carbone (H/C) et tout en la transformant plus ou moins partiellement en coupes plus légères.

Les procédés d'hydrotraitement des résidus en lit fixe (couramment appelé "Resid Desulfurization" unit ou RDS) conduisent à des performances en raffinage élevées : typiquement ils permettent de produire une coupe de température d'ébullition supérieure à 370°C contenant moins de 0,5% poids de soufre et moins de 20 ppm de métaux à partir de charges contenant jusqu'à 5% poids de soufre et jusqu'à 250 ppm de métaux (Ni+V). Les différents effluents ainsi obtenus peuvent servir de base pour la production de fiouls lourds de bonne qualité et/ou de charges prétraitées pour d'autres unités telles que le craquage catalytique ("Fluid Catalytic Cracking" selon la terminologie anglo-saxonne). Par contre, l'hydroconversion du résidu en coupes plus légères que le résidu atmosphérique (gazole et essence notamment) est en général faible, typiquement de l'ordre de 10 à 20 % poids. Dans un tel procédé, la charge, préalablement mélangée à de l'hydrogène, circule à travers plusieurs réacteurs en lit fixe disposés en série et remplis par des catalyseurs. La pression totale est typiquement comprise entre 100 et 200 bars (10-20 MPa) et les températures entre 340 et 420 °C. Les effluents soutirés du dernier réacteur sont envoyés vers une section de fractionnement.

Classiquement, le procédé d'hydrotraitement en lit fixe est constitué d'au moins deux étapes (ou sections). La première étape dite d'hydrodémétallation (HDM) vise principalement à éliminer la majorité des métaux de la charge en utilisant un ou plusieurs catalyseurs d'hydrodémétallation. Cette étape regroupe principalement les opérations d'élimination du vanadium et du nickel et dans une moindre mesure du fer.

La seconde étape ou section, dite d'hydrodésulfuration (HDS), consiste à faire passer le produit de la première étape sur un ou plusieurs catalyseurs d'hydrodésulfuration, plus actifs en termes d'hydrodésulfuration et d'hydrogénation de la charge, mais moins tolérants aux métaux.

Pour l'étape d'hydrodémétallation (HDM), le catalyseur doit être apte à traiter des charges riches en métaux et en asphaltènes, tout en ayant un haut pouvoir démétallisant associé à une haute capacité de rétention en métaux et une grande résistance au cokage. Des catalyseurs présentant une distribution poreuse bimodale permettant d'atteindre de forts rendements en hydrodémétallation ont été décrits dans le brevet US 5 221 656. L'avantage d'une telle distribution poreuse est aussi mise en avant dans les brevets US 5 089 463 et US 7 119 045. La phase active initiale du catalyseur placé dans l'étape d'hydrodémétallation est généralement constituée de nickel et de molybdène, et éventuellement de dopants tels que le phosphore. Cette phase active est connue pour être plus hydrogénante qu'une phase constituée de cobalt et de molybdène, aussi utilisée parfois, et permet donc de limiter la formation de coke dans la porosité et ainsi la désactivation.

Pour l'étape d'hydrodésulfuration (HDS), le catalyseur doit présenter un fort potentiel hydrogénolysant de manière à réaliser un raffinage profond des produits : désulfuration, poursuite de la démétallation, abaissement de la teneur en Carbon Conradson (Carbon Conradson Residue : CCR) et de la teneur en asphaltènes. Un tel catalyseur se caractérise par un faible volume macroporeux (US 6 589 908). De plus, on apprend dans le brevet US 4 818 743 que la distribution poreuse peut être monopopulée entre 1 et 13 nm ou bipopulée avec une différence relative entre les deux populations qui peut varier de 1 à 20 nm, comme dans le brevet US 6 589 908. La phase active du catalyseur placé dans l'étape d'hydrodésulfuration est généralement constituée de cobalt et de molybdène, comme cela est décrit dans le brevet US 6 332 976.

Lorsque la teneur en métaux dans la charge est trop importante (supérieure à 250 ppm) et/ou lorsqu'une conversion importante (transformation de la fraction lourde 540°C+ (ou 370°C+) en une fraction plus légère 540°C- (ou 370°C-) est recherchée, des procédés d'hydrotraitement en lit bouillonnant sont préférés. Dans ce type de procédé (cf.

M.S. Rana et al., Fuel 86 (2007), p1216), les performances en purification sont moindres que celles des procédés RDS, mais l'hydroconversion de la fraction résidu est élevée (de l'ordre de 45 à 85 % en volume). Les températures importantes mises en jeu, comprises entre 415 et 440 °C, contribuent à cette hydroconversion élevée. Les réactions de craquage thermique sont en effet favorisées, le catalyseur n'ayant pas en général une fonction d'hydroconversion spécifique. De plus, les effluents formés par ce type de conversion peuvent présenter des problèmes de stabilité (formation de sédiments).

Pour l'hydrotraitement de résidus, le développement de catalyseurs polyvalents, performants et stables est donc indispensable.

Pour des procédés en lit bouillonnant, la demande de brevet WO 2010/002699 enseigne notamment qu'il est avantageux d'utiliser un catalyseur dont le support présente un diamètre de pore médian compris entre 10 et 14 nm et dont la distribution est étroite. Il y est précisé que moins de 5% du volume poreux doit être développé dans les pores de taille supérieure à 21 nm et de la même manière, moins de 10 % du volume doit être observé dans les petits pores de tailles inférieure à 9 nm. Le brevet US5,968,348 confirme la préférence d'utilisation d'un support dont la mésoporosité reste voisine de 11 à 13 nm, avec éventuellement la présence de macropores et une surface BET élevée, ici au moins 175 m$^2$/g.

Pour des procédés en lit fixe, le brevet US 6 780 817 enseigne qu'il est nécessaire d'utiliser un support de catalyseur qui présente au moins 0,32 ml/g de volume macroporeux pour un fonctionnement stable en lit fixe. Un tel catalyseur présente de plus un diamètre médian, dans les mésopores, de 8 à 13 nm et une surface spécifique élevée d'au moins 180 m$^2$/g.

Le brevet US 6 919 294 décrit aussi l'utilisation de support dit bimodaux, donc mésoporeux et macroporeux, avec l'utilisation de forts volumes macroporeux, mais avec un volume mésoporeux limité à 0,4 ml/g au plus.

Les brevets US 4 976 848 et US 5 089 463 décrivent un catalyseur d'hydrodémétallation et hydrodésulfuration de charges lourdes comprenant une phase active hydrogénante à base de métaux des groupes VI et VIII et un support inorganique oxyde réfractaire, le catalyseur ayant précisément entre 5 et 11 % de son volume poreux sous forme de macropores et a des mésopores de diamètre médian supérieur à 16,5 nm.

Le brevet US 7 169 294 décrit un catalyseur d'hydroconversion de charges lourdes, comprenant entre 7 et 20% de métal du groupe VI et entre 0,5 et 6% poids de métal du groupe VIII, sur un support aluminique. Le catalyseur a une surface spécifique comprise entre 100 et 180 m$^2$/g, un volume poreux total supérieur ou égal à 0,55 ml/g, au moins 50 % du volume poreux total est compris dans les pores de taille supérieure à 20 nm, au moins 5 % du volume poreux total est compris dans les pores de taille supérieure à 100 nm, au moins 85 % du volume poreux total étant compris dans les pores de taille comprise entre 10 et 120 nm, moins de 2 % du volume poreux total étant contenu dans les pores de diamètre supérieur à 400 nm, et moins de 1 % du volume poreux total étant contenu dans les pores de diamètre supérieur à 1000 nm.

De nombreux développements portent notamment sur l'optimisation de la distribution poreuse du catalyseur ou de mélanges de catalyseurs par l'optimisation du support de catalyseur.

Ainsi le brevet US 6 589 908 décrit par exemple un procédé de préparation d'une alumine caractérisée par une absence de macropores, moins de 5 % du volume poreux total constitué par les pores de diamètre supérieur à 35 nm, un haut volume poreux supérieur à 0,8 ml/g, et une distribution de mésopores bimodale dans laquelle les deux modes sont séparés par 1 à 20 nm et le mode poreux primaire étant plus grand que le diamètre médian poreux. A cet effet, le mode de préparation décrit met en œuvre deux étapes de précipitation de précurseurs d'alumine dans des conditions de température, pH et débits bien contrôlées. La première étape opère à une température comprise entre 25 et 60°C, un pH compris entre 3 et 10. La suspension est ensuite chauffée jusqu'à une température comprise entre 50 et 90°C. Des réactifs sont de nouveau ajoutés à la suspension, qui est ensuite lavée, séchée, mise en forme et calcinée pour former un support de catalyseur. Ledit support est ensuite imprégné par une solution de phase active pour obtenir un catalyseur d'hydrotraitement ; un catalyseur d'hydrotraitement de résidus sur un support monomodal mésoporeux de diamètre médian poreux autour de 20 nm est décrit.

La demande de brevet WO 2004/052534 A1 décrit l'utilisation en hydrotraitement de charges hydrocarbonées lourdes d'un mélange de deux catalyseurs avec des supports ayant des caractéristiques poreuses différentes, le premier catalyseur ayant plus de la moitié du volume poreux dans les pores de diamètre supérieur à 20 nm, 10 à 30 % du volume poreux étant contenu dans les pores de diamètre supérieur à 200 nm, le volume poreux total étant supérieur à 0,55 ml/g, le deuxième ayant plus de 75 % du volume poreux contenu dans les pores de diamètre compris entre 10 et 120 nm, moins de 2 % dans les pores de diamètre supérieur à 400 nm et 0 à 1% dans les pores de diamètre supérieur à 1000 nm. Le procédé de préparation décrit pour la préparation de ces catalyseurs met en œuvre une étape de coprécipitation de sulfate d'aluminium avec de l'aluminate de sodium, le gel obtenu est ensuite séché, extrudé et calciné. Il est possible d'ajouter de la silice durant ou après la coprécipitation. L'ajustement de la mise en forme permet d'obtenir les caractéristiques du support.

Le document EP2255873 divulgue un catalyseur d'hydroconversion mésoporeux et macroporeux comprenant une matrice oxyde majoritairement aluminique calcinée, et une phase active hydro-déshydrogénante comprenant au moins un métal du Groupe VIB de la classification périodique des éléments, éventuellement au moins un métal du groupe VIII de la classification périodique des éléments, ladite phase active étant entièrement comalaxée au sein de ladite matrice oxyde majoritairement aluminique calcinée, ledit catalyseur présentant une surface spécifique $S_{BET}$ supérieure à 100 m$^2$/g, un diamètre médian mésoporeux en volume compris entre 12 nm et 25 nm, bornes incluses, un volume mésoporeux tel que mesuré par intrusion au porosimètre à mercure, supérieur ou égal à 0,65 ml/g, et un volume poreux total mesuré par porosimétrie au mercure supérieur ou égal à 0,75 ml/g, et comprenant un volume macroporeux compris entre 15 et 35 % du volume poreux total. Cependant, ce document ne divulgue pas de diamètre médian macroporeux en volume compris entre 250 et 1500 nm, bornes incluses.

Le document WO2005/028106 divulgue la préparation par précipitation d'un support alumine présentant une distribution poreuse bien spécifique, pouvant être utilisé comme support de catalyseur dans un procédé d'hydroconversion de charges hydrocarbonées lourdes. Cependant, ce document ne divulgue pas un procédé de préparation dans lequel on réalise une première étape de précipitation dans laquelle on a mis préalablement en solution un précurseur d'acide d'aluminium dans l'eau pour obtenir une suspension dont le pH est compris entre 0,5 et 5.

Des métaux des groupes VIB, VII, IA ou V peuvent être incorporés dans le support, par imprégnation et/ou par incorporation dans le support avant sa mise en forme en particules. L'imprégnation est préférée.

Le brevet US 7 790 652 décrit des catalyseurs d'hydroconversion pouvant être obtenus par coprécipitation d'un gel d'alumine, puis introduction de métaux sur le support obtenu par toute méthode connue de l'homme du métier, notamment par imprégnation. Le catalyseur obtenu a une distribution monomodale avec un diamètre médian mésoporeux compris entre 11 et 12,6 nm et une largeur de distribution poreuse inférieure à 3,3 nm.

Des approches alternatives à l'introduction conventionnelle de métaux sur des supports aluminiques ont également été développées, comme l'incorporation de fines de catalyseurs dans le support. Ainsi, la demande de brevet WO2012/021386 décrit des catalyseurs d'hydrotraitement comprenant un support de type oxyde poreux réfractaire mis en forme à partir de poudre d'alumine et de 5% à 45% en poids de fines de catalyseur. Le support comprenant les fines est ensuite séché et calciné. Le support obtenu présente une surface spécifique comprise entre 50 m$^2$/g et 450 m$^2$/g, un diamètre moyen poreux compris entre 50 et 200 Å, et un volume poreux total dépassant 0,55 cm$^3$/g. Le support comprend ainsi du métal incorporé grâce aux métaux contenus dans les fines de catalyseur. Le support résultant peut être traité au moyen d'un agent chélatant. Le volume poreux peut être partiellement rempli au moyen d'un additif polaire, puis peut être imprégné par une solution métallique d'imprégnation.

Au vu de l'art antérieur, il semble très difficile d'obtenir un catalyseur d'hydroconversion présentant à la fois une porosité bimodale, avec un fort volume mésoporeux couplé à un volume macroporeux conséquent, un diamètre médian des mésopores très élevé, et une phase active hydro-déshydrogénante imprégnée. Par ailleurs, l'augmentation de la porosité se fait souvent au détriment de la surface spécifique, et de la résistance mécanique.

De manière surprenante, la demanderesse a découvert qu'un catalyseur préparé à partir d'une alumine résultant de la calcination d'un gel d'alumine spécifique présentant une teneur en alumine ciblée, par imprégnation d'une phase active hydro-déshydrogénante sur un support comprenant majoritairement l'alumine calcinée présentait une structure poreuse particulièrement intéressante avec une teneur en phase active adaptée pour l'hydrotraitement de charges lourdes, notamment pour les réactions d'hydrodémétallation.

## Objets de l'invention

La présente invention concerne un procédé de préparation d'un catalyseur d'hydroconversion comprenant :

- un support oxyde majoritairement aluminique calciné comportant une teneur en alumine supérieure ou égale à 90% poids et une teneur en silice en équivalant Si02 d'au plus 10% poids par apport à l'oxyde final ;
- du molybdène, la teneur en molybdène, mesurée par fluorescence des rayons X, étant comprise entre 2 et 10 % poids de trioxyde de molybdène par rapport au poids du catalyseur, éventuellement au moins un métal du groupe VIII de la classification périodique des élément choisi parmi le cobalt et/ ou le nickel, éventuellement du phosphore ledit catalyseur présentant :

  - une surface spécifique Sbet supérieure ou égale à 100 m2/g,
  - un volume poreux total mesuré par porosimétrie au mercure supérieur ou égal à 0,75 ml/g,
  - un diamètre médian mésoporeux en volume supérieur ou égal à 18 nm,
  - un volume mésoporeux tel que mesuré par intrusion au porosimètre à mercure, supérieur ou égal à 0,65 ml/g,
  - un diamètre médian macroporeux en volume compris entre 100 et 1200 nm, bornes incluses ;
  - un volume macroporeux compris entre 15 et 40 % du volume poreux total ;

ledit procédé comprenant au moins les étapes suivantes :
a) Une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes, et dans lequel le précurseur acide de l'étape a) est introduit en quantité correspondant à 0,5 à 4 % poids de l'alumine totale formée à l'issue de l'étape c); b) Une étape d'ajustement du pH par ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes ; c) Une étape de coprécipitation de la suspension obtenue à l'issue de l'étape b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L ; d) une étape de filtration de la suspension obtenue à l'issue de l'étape c) de coprécipitation pour obtenir un gel d'alumine ; e) une étape de séchage dudit gel d'alumine obtenu à l'étape d) pour obtenir une poudre, f) une étape de mise en forme de la poudre obtenue à l'issue de l'étape e) pour obtenir un matériau cru, g) une étape de traitement thermique du matériau cru obtenu à l'issue de l'étape f) à une température comprise entre 500 et 1000°C, en présence ou non d'un flux d'air contenant jusqu'à 60% en volume d'eau, pour obtenir un support oxyde aluminique ; h) une étape d'imprégnation de la phase active hydro-déshydrogénante sur ledit support oxyde aluminique.

L'invention concerne également le catalyseur susceptible d'être préparé par le procédé de préparation décrit.

Le catalyseur d'hydroconversion mésoporeux et macroporeux présente :

- une surface spécifique Sbet supérieure à 110 m2/g,
- un diamètre médian mésoporeux en volume tel que mesuré par intrusion au porosimètre à mercure compris entre 18 nm et 26 nm,
- un diamètre médian macroporeux en volume tel que mesuré par intrusion au porosimètre à mercure compris entre 100 et 1200 nm, bornes incluses
- un volume mésoporeux tel que mesuré par intrusion au porosimètre à mercure, supérieur ou égal à 0,70 ml/g
- un volume poreux total mesuré par porosimétrie au mercure supérieur ou égal à 0,85 ml/g,
- un volume macroporeux tel que mesuré par intrusion au porosimètre à mercure compris entre 20 et 30 % du volume poreux total
- une absence de micropores.

L'invention concerne enfin l'utilisation de ce catalyseur dans les procédés d'hydrotraitement ou d'hydroconversion de charges hydrocarbonées lourdes, notamment de charges fortement concentrées en métaux (par exemple le nickel et le vanadium, avec des concentrations dépassant 50 ppm) .

## Description de l'invention

### Résumé

L'invention concerne un procédé de préparation d'un catalyseur d'hydroconversion comprenant :

-un support oxyde majoritairement aluminique calciné ;

une phase active hydro-déshydrogénante comprenant du molybdène, la teneur en molybdène, mesurée par fluorescence des rayons X, étant comprise entre 2 et 10 % poids de trioxyde de molybdène par rapport au poids du catalyseur, éventuellement au moins un métal du groupe VIII de la classification périodique des élément choisi parmi le cobalt et/ou le nickel, éventuellement du phosphore, ledit catalyseur présentant :

- une surface spécifique Sbet supérieure ou égale à 100 m$^2$/g,
- un volume poreux total mesuré par porosimétrie au mercure supérieur ou égal à 0,75 ml/g,
- un diamètre médian mésoporeux en volume compris entre 18 nm et 26 nm,
- un diamètre médian macroporeux en volume compris entre 100 et 1200 nm, bornes incluses ;
- un volume mésoporeux tel que mesuré par intrusion au porosimètre à mercure, supérieur ou égal à 0,65 ml/g,
- un volume macroporeux compris entre 15 et 40 % du volume poreux total ;

ledit procédé comprenant au moins les étapes suivantes :

a) Une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes ;

b) Une étape d'ajustement du pH par ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes ;

c) Une étape de coprécipitation de la suspension obtenue à l'issue de l'étape b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L ;

d) une étape de filtration de la suspension obtenue à l'issue de l'étape c) de co-précipitation pour obtenir un gel d'alumine ;

e) une étape de séchage dudit gel d'alumine obtenu à l'étape d) pour obtenir une poudre,

f) une étape de mise en forme de la poudre obtenue à l'issue de l'étape e) pour obtenir un matériau cru,

g) une étape de traitement thermique du matériau cru obtenu à l'issue de l'étape f) à une température comprise entre 500 et 1000°C, en présence ou non d'un flux d'air contenant jusqu'à 60% en volume d'eau, pour obtenir un support oxyde aluminique ;

h) une étape d'imprégnation de la phase active hydro-déshydrogénante sur ledit support oxyde aluminique.

La concentration en alumine de la suspension de gel d'alumine obtenue à l'étape c) est de préférence comprise entre 13 et 35 g/l, de manière très préférée entre 15 et 33 g/l.

De préférence, dans les étapes a), b), c) le milieu réactionnel aqueux est de l'eau et lesdites étapes opèrent sous agitation, en l'absence d'additif organique.

Le précurseur acide de l'étape a) est introduit en quantité correspondant à 0,5 à 4 % poids de l'alumine totale formée à l'issue de l'étape c).

L'invention concerne également un catalyseur d'hydroconversion mésoporeux et macroporeux susceptible d'être préparé par le procédé ci-dessus.

Le catalyseur présente :

- une surface spécifique Sbet supérieure à 110 $m^2/g$,
- un diamètre médian mésoporeux en volume compris entre 18 nm et 26 nm,
- un diamètre médian macroporeux en volume compris entre 100 et 1200 nm, bornes incluses
- un volume mésoporeux tel que mesuré par intrusion au porosimètre à mercure, supérieur ou égal à 0,70 ml/g
- un volume poreux total mesuré par porosimétrie au mercure supérieur ou égal à 0,85 ml/g,
- un volume macroporeux compris entre 20 et 30 % du volume poreux total
- une absence de micropores.

De préférence, le catalyseur présente un diamètre médian mésoporeux en volume déterminé par intrusion au porosimètre à mercure compris entre 19 et 25 nm et un diamètre médian macroporeux en volume compris entre 110 et 1000 nm, bornes incluses.

Dans le catalyseur dans le catalyseur dans le catalyseur d'hydroconversion selon l'invention, la teneur du molybdène est comprise entre 2 et 10% poids de trioxyde de molybdène par rapport à la masse totale du catalyseur, la teneur en métal du groupe VIII est avantageusement comprise entre 0,00 et 3,6 % en poids de l'oxyde de métal du groupe VIII par rapport à la masse totale du catalyseur, la teneur en élément phosphore est avantageusement comprise entre 0 à 5% en poids de pentoxyde de phosphore par rapport à la masse totale du catalyseur.

De préférence, la phase active hydro-déshydrogénante est composée de molybdène ou de nickel et de molybdène ou de cobalt et de molybdène.

Avantageusement, la phase active hydro-déshydrogénante comprend également du phosphore.

L'invention concerne également un procédé d'hydrotraitement d'une charge hydrocarbonée lourde choisie parmi les résidus atmosphériques, les résidus sous vide issus de la distillation directe, les huiles désasphaltées, les résidus issus des procédés de conversions tels que par exemple ceux provenant du coking, d'une hydroconversion en lit fixe, en lit bouillonnant ou encore en lit mobile, pris seuls ou en mélange, comprenant la mise en contact de ladite charge avec un catalyseur d'hydroconversion selon l'invention ou préparé selon le procédé de préparation selon l'invention.

Ledit procédé d'hydrotraitement peut être réalisé en lit bouillonnant à une température comprise entre 320 et 450°C, sous une pression partielle d'hydrogène comprise entre 3 MPa et 30 MPa, à une vitesse spatiale avantageusement comprise entre 0,1 et 10 volumes de charge par volume de catalyseur et par heure, et avec un rapport hydrogène gazeux sur charge liquide d'hydrocarbures avantageusement compris entre 100 et 3000 normaux mètres cubes par mètres cubes.

Ledit procédé d'hydrotraitement peut être réalisé en lit fixe à une température comprise entre 320°C et 450°C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.

Ledit procédé peut être un procédé d'hydrotraitement d'une charge hydrocarbonée lourde de type résidus en lit fixe comprenant au moins :

une étape d'hydrodémétallation ;
une étape d'hydrodésulfuration ;

dans lequel ledit catalyseur d'hydroconversion est utilisé dans au moins une desdites étapes a) et b).

Dans un mode de réalisation préféré, ledit catalyseur d'hydroconversion est utilisé dans les premiers lits catalytiques de l'étape d'hydrodémétallation a).

Ledit procédé peut être un procédé d'hydrotraitement de charge hydrocarbonée lourde en lit bouillonnant, dans lequel la charge a une teneur cumulée en métaux supérieure ou égale à 50 ppm et ledit catalyseur d'hydroconversion est utilisé pour les réactions d'hydrodémétallation.

## Liste des figures

Les figures sont présentées à titre illustratif et se rapportent aux exemples.

La Figure 1 présente l'évolution à 300 heures des performances en hydrodémétallation HDM relatives des catalyseurs A1, AA1, et E1 sur une charge n°1 comprenant un mélange de résidu atmosphérique et de résidu sous vide (RAAM/RSVAL).

La Figure 2 présente l'évolution à 300 heures des performances en hydrodésulfuration HDS relatives des catalyseurs A1, AA1, et E1 sur une charge n°1 comprenant un mélange de résidu atmosphérique et de résidu sous vide (RAAM/RSVAL).

La Figure 3 présente l'évolution à 300 heures des performances en hydrodémétallation HDM relatives des catalyseurs A1, CA1, B1, D1 et E1 sur une charge n°2 comprenant un mélange de résidu atmosphérique et de résidu sous vide (RAAM/RSVAL).

La figure 4 présente l'évolution à 300 heures des performances en hydrodésulfuration HDS relatives des catalyseurs A1, CA1, B1, D1 et E1 sur une charge n°2 comprenant un mélange de résidu atmosphérique et de résidu sous vide (RAAM/RSVAL).

La figure 5 présente l'évolution à 300 heures des performances en hydrodémétallation HDM relatives des catalyseurs A1 et E1 sur une charge n°2 comprenant un mélange de résidu atmosphérique et de résidu sous vide (RAAM/RSVAL).

La figure 6 présente l'évolution à 300 heures des performances en hydrodésulfuration HDS relatives des catalyseurs A1 et E1 sur une charge n°2 comprenant un mélange de résidu atmosphérique et de résidu sous vide (RAAM/RSVAL).

## Terminologie et techniques de caractérisation

Le catalyseur et le support de la présente invention présentent une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Dans l'exposé qui suit de l'invention, on entend par volume poreux total de l'alumine ou du support ou du catalyseur, le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation », P 1050-5, écrits par Jean Charpin et Bernard Rasneur.

Afin d'obtenir une meilleure précision, la valeur du volume poreux total en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°.

On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux comme étant un diamètre tel que tous les pores de taille inférieure à ce diamètre constituent 50% du volume mésoporeux total déterminé par intrusion au porosimètre à mercure.

On définit également le diamètre médian macroporeux comme étant un diamètre tel que tous les pores de taille inférieure à ce diamètre constituent 50% du volume macroporeux total déterminé par intrusion au porosimètre à mercure.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

## Description détaillée de l'invention

La demanderesse a découvert que la combinaison d'au moins un élément du groupe VI B, éventuellement au moins un élément du groupe VIII et éventuellement l'élément phosphore avec un oxyde aluminique qui présente simultanément un volume poreux élevé (>0,80 ml/g), un diamètre médian des mésopores élevé (compris entre 18 nm et 26 nm), et ainsi une surface BET supérieure à 110 m$^2$/g, conduit à un catalyseur à propriétés texturales particulières qui présente un gain significatif d'hydrodémétallation dans un procédé en lit fixe ou dans un procédé en lit bouillonnant traitant des charges hydrocarbonées lourdes, notamment des charges contenant plus de 50 ppm de métaux cumulés. Le support aluminique mésoporeuxamorphe provient de la mise en forme d'un gel d'alumine présentant une teneur en alumine contrôlée, ledit gel d'alumine étant obtenu par précipitation d'au moins un sel d'aluminium.

L'introduction de ce catalyseur dans les premiers lits catalytiques d'un procédé en lit fixe ou dans un procédé en lit bouillonnant traitant des charges fortement concentrées en métaux, permet un gain significatif d'hydrodémétallation, et requiert donc une température de fonctionnement plus faible que les catalyseurs de l'art antérieur pour achever le même niveau de conversion des composés métallés. Un gain de stabilité dans le temps important est aussi observé.

## Description générale du catalyseur

Le catalyseur susceptible d'être préparé selon l'invention se présente sous la forme d'un support oxyde majoritairement aluminique calciné sur lequel sont répartis les métaux de la phase active. Le support fait l'objet de caractéristiques spécifiques qui sont décrites ci-après, tout comme, dans une moindre mesure, la phase active et sa formulation. On décrit aussi plus loin, selon l'invention, leurs préparations ainsi que l'utilisation du catalyseur dans des procédés d'hydrotraitement de charges hydrocarbonées lourdes.

Les quantités respectives en molybdène et en métal du groupe VIII sont avantageusement telles que le rapport atomique métal(aux) du groupe VIII sur molybdène (VIII/Mo) soit compris entre 0,0:1.0 et 0,7:1.0, de préférence 0.05:1.0 et 0.7:1.0, de manière très préférée entre 0.1:1.0 et 0.6:1.0 et de manière encore plus préférée entre 0.2:1.0 et 0.5:1.0. Ce rapport peut notamment être ajusté selon le type de charge et le procédé utilisé.

Les quantités respectives en molybdène et en phosphore sont telles que le rapport atomique phosphore sur molybdène (P/Mo) soit compris entre 0,0:1,0 et 1,0:1,0, de préférence entre 0,4:1,0 et 0,9:1,0 et de manière encore plus préférée entre 0,5;1,0 et 0,85:1,0.

La teneur en molybdène est comprise entre 2 et 10% poids de trioxyde de molybdène par rapport à la masse totale du catalyseur, de préférence entre 3 et 8% et de manière encore plus préférée entre 4 et 7% poids.

La teneur en métal du groupe VIII est avantageusement comprise entre 0,0 et 3,6%, notamment entre 0,25 et 3,6% en poids, de manière préférée entre 0,4 et 2,5% en poids de l'oxyde d'au moins du métal du groupe VIII par rapport à la masse totale du catalyseur, de manière très préférée entre 0,6 et 3,7% en poids, et de manière encore plus préférée entre 1,2 et 2,8% poids.

La teneur en élément phosphore est avantageusement comprise entre 0 et 5% en poids, de préférence entre 0,2 et 5,0% en poids de pentaoxyde de phosphore par rapport à la masse totale du catalyseur, de manière très préférée entre 0,6 et 3,5% poids et de manière encore plus préférée entre 1,0 et 3,0% poids.

Ledit catalyseur à base de l'oxyde poreux aluminique selon l'invention est généralement présenté sous toutes les formes connues de l'Homme du métier. De préférence, il est constitué d'extrudés de diamètre généralement compris entre 0,5 et 10 mm, de préférence entre 0,8 et 3,2 mm et de manière très préférée entre 1,0 et 2,5 mm. Celui-ci peut-être avantageusement présenté sous la forme d'extrudés cylindrique, trilobés ou quadrilobés. De préférence sa forme est multilobée, trilobée ou quadrilobée. La forme des lobes peut être ajustée selon toutes les méthodes connues de l'art antérieur.

### Caractéristiques du support selon l'invention

Le support du catalyseur selon l'invention comprend de manière majoritaire un oxyde poreux aluminique, De préférence le support est constitué exclusivement d'alumine.

Le support dudit catalyseur selon l'invention comporte une teneur en alumine supérieure ou égale à 90% et une teneur en silice en équivalent $SiO_2$ d'au plus 10 % poids par rapport à l'oxyde final, de préférence une teneur en silice comprise inférieure à 5% poids, de manière très préférée une teneur inférieure à 2 % poids.

La silice peut être introduite par toute technique connue de l'homme du métier, par exemple lors de la synthèse du gel d'alumine ou pendant l'étape de comalaxage.

Le support utilisé pour la préparation du catalyseur selon l'invention présente avantageusement un volume poreux total (VPT) d'au moins 0,80 ml/g, de préférence d'au moins 0,90 ml/g, et de manière très préférée d'au moins 0,95 ml/g.

Le support utilisé selon l'invention présente avantageusement un volume macroporeux, $V_{50nm}$, défini comme le volume des pores de diamètre supérieur à 50 nm, compris entre 10 et 35 % du volume poreux total, de préférence entre 15 et 30 % du volume poreux total, et de manière très préférée entre 20 et 30 % du volume poreux total.

Le support utilisé selon l'invention présente avantageusement un volume mésoporeux, $V_{méso}$, défini comme le volume des pores de diamètre compris entre 2 et 50 nm, bornes incluses, d'au moins 0,70 ml/g, et de préférence d'au moins 0,75 ml/g.

Le diamètre médian mésoporeux ($D_{p\ méso}$), le volume mésoporeux étant le volume correspondant aux pores de diamètre compris entre 2 et 50 nm, bornes incluses, est avantageusement compris entre 18 et 25 nm, de manière préférée compris entre 19 et 23 nm, de manière très préférée compris entre 20 nm et 23 nm, bornes incluses.

Le diamètre médian macroporeux ($D_{p\ macro}$), le volume macroporeux, $V_{50nm}$, étant défini comme le volume des pores de diamètre supérieur à 50 nm, est avantageusement compris entre 100 nm et 1200 nm, de manière préférée entre 110 nm et 1000 nm, de manière très préférée entre 120 et 800 nm.

Le support de catalyseur selon la présente invention présente avantageusement une surface spécifique BET ($S_{BET}$) d'au moins 110 $m^2/g$, de préférence d'au moins 120 $m^2/g$ et de manière encore plus préférée comprise entre 120 et 160 $m^2/g$. On entend par surface BET, la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

Le mode de préparation selon la présente invention présente notamment l'avantage de conduire à un support oxyde aluminique poreux ayant une résistance mécanique tout à fait satisfaisante par rapport aux volumes poreux qui la caractérisent, ladite résistance étant matérialisée par la valeur de l'écrasement grain à grain EGG, de préférence d'au moins 0,5 daN/mm, de manière très préférée d'au moins 0,8 daN/mm. La méthode de mesure de l'écrasement grain à grain (EGG) consiste à mesurer la force de compression maximale que peut supporter un extrudé avant sa rupture, lorsque le produit est placé entre deux plans se déplaçant à la vitesse constante de 5 cm/min. La compression est appliquée perpendiculairement à l'une des génératrices de l'extrudé, et l'écrasement grain à grain est exprimé comme le rapport de la force à la longueur de la génératrice de l'extrudé.

### Caractéristiques du catalyseur

Le catalyseur fini, c'est-à-dire avec les métaux déposés sur sa surface par toute méthode connue de l'Homme du métier, comme cela est décrit ci-après, présente en conséquence les propriétés texturales à suivre.

Le catalyseur selon l'invention présente avantageusement un volume poreux total (VPT) d'au moins 0,75 ml/g, de préférence d'au moins 0,85 ml/g, et de manière très préférée d'au moins 0,90 ml/g, tel que déterminé par intrusion au porosimètre à mercure.

Le catalyseur utilisé selon l'invention présente un volume macroporeux, $V_{50nm}$ compris entre 15 et 40% du volume poreux total, de préférence entre 17 et 35% du volume poreux total. Dans un mode de réalisation très préféré, le volume macroporeux représente entre 20 et 30 % du volume poreux total.

Le volume mésoporeux, $V_{méso}$, du catalyseur est d'au moins 0,65 ml/g, et de préférence d'au moins 0,70 ml/g.

Le diamètre médian mésoporeux est compris entre 18 nm et 26 nm, de préférence entre 19 nm et 25 nm et de manière très préférée entre 20 et 24 nm, bornes incluses.

Le diamètre médian macroporeux est compris entre 100 et 1200 nm, de préférence entre 110 et 1000 nm, de manière très préférée entre 120 et 800 nm, bornes incluses.

Le catalyseur utilisé selon la présente invention présente avantageusement une surface spécifique BET ($S_{BET}$) d'au moins 100 m$^2$/g, de préférence d'au moins 110 m$^2$/g et de manière encore plus préférée comprise entre 120 et 150 m$^2$/g.

### Préparation du support oxyde du catalyseur.

L'oxyde poreux aluminique utilisé dans le support du catalyseur selon la présente invention est un oxyde poreux aluminique bimodal, macroporeux et mésoporeux.

De préférence, l'oxyde poreux aluminique mésoporeux est dépourvu de micropores.

De préférence, l'oxyde poreux aluminique présente avantageusement une surface spécifique supérieure à 110 m$^2$/g.

De manière très préférée, la surface spécifique de l'oxyde poreux aluminique est supérieure à 120 m$^2$/g.

De manière encore plus préférée, la surface spécifique de l'oxyde poreux aluminique est comprise entre 120 et 160 m$^2$/g.

Le volume mésoporeux, défini comme étant le volume compris dans les pores ayant un diamètre médian compris entre 2 et 50 nm, est mesuré par porosimétrie au mercure. Selon l'invention, le volume mésoporeux de l'oxyde poreux aluminique est supérieur ou égal à 0,70 ml/g, de manière très préférée supérieur ou égal à 0,75 ml/g.

Le support oxyde poreux aluminique dudit catalyseur selon l'invention comporte généralement une teneur en alumine supérieure ou égale à 90% et une teneur en silice en équivalent $SiO_2$ d'au plus 10% poids par rapport à l'oxyde final, de préférence une teneur en silice comprise inférieure à 5% poids, de manière très préférée une teneur inférieure à 2 % poids. La silice peut être introduite par toute technique connue de l'homme du métier, par exemple lors de la synthèse du gel d'alumine ou pendant l'étape de comalaxage.

De préférence, le support oxyde aluminique selon l'invention est constitué exclusivement d'alumine.

De manière très préférée, le support oxyde aluminique selon l'invention est une alumine non mésostructurée.

Le support oxyde poreux aluminique préparé selon l'invention est obtenu par filtration, séchage, mise en forme et traitement thermique d'un gel d'alumine spécifique. La préparation dudit gel d'alumine comprend trois étapes successives : a) étape de mise en solution d'un précurseur acide d'alumine, b) étape d'ajustement du pH de la suspension au moyen d'un précurseur basique, et c) étape de coprécipitation d'au moins un précurseur acide et d'au moins un précurseur basique, l'un des deux au moins contenant de l'aluminium. A la fin de la synthèse proprement dite du gel d'alumine, c'est à dire à la fin de l'étape c), la concentration en alumine finale dans la suspension doit être comprise entre 10 et 38 g/L, préférentiellement entre 13 et 35 g/L et plus préférentiellement entre 15 et 33 g/L.

### a) Étape de mise en solution

L'étape a) est une étape de mise en solution d'un précurseur acide d'aluminium dans l'eau, réalisée à une température comprise entre 20 et 80°C, de manière préférée entre 20 et 75 °C et de manière plus préférée entre 30 et 70°C. Le précurseur acide d'aluminium est choisi parmi le sulfate d'aluminium, le chlorure d'aluminium et le nitrate d'aluminium, de préférence le sulfate d'aluminium. Le pH de la suspension obtenue est compris entre 0,5 et 5, de préférence entre 1 et 4, de manière préférée entre 1,5 et 3,5. Cette étape contribue avantageusement à une quantité d'alumine introduite par rapport à l'alumine finale comprise entre 0,5 et 4% poids, de préférence entre 1 et 3% poids, de manière très préférée entre 1,5 et 2,5% poids. La suspension est laissée sous agitation pendant une durée comprise entre 2 et 60 minutes, et de préférence de 5 à 30 minutes.

**b) Étape d'ajustement du pH**

L'étape d'ajustement du pH b) consiste en l'ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium.

De manière préférée, le précurseur basique est un précurseur d'alumine choisi parmi l'aluminate de sodium et l'aluminate de potassium. De manière très préférée, le précurseur basique est l'aluminate de sodium.

L'étape b) est réalisée à une température comprise entre 20 et 90°C, de manière préférée comprise entre 20 et 80 °C et de manière plus préférée entre 30 et 70°C et à un pH compris entre 7 et 10, de préférence entre 8 et 10, de manière préférée entre 8,5 et 10 et de manière très préférée entre 8,7 et 9,9. La durée de l'étape b) d'ajustement du pH est comprise entre 5 et 30 minutes, de préférence entre 8 et 25 minutes, et de manière très préférée entre 10 et 20 minutes.

**c) Étape de coprécipitation**

L'étape c) est une étape de précipitation par mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, lesdits précurseurs étant choisis identiques ou non aux précurseurs introduits aux étapes a) et b). Le débit relatif des précurseurs acide et basique est choisi de manière à obtenir un pH du milieu réactionnel compris entre 7 et 10 et le débit du ou des précurseurs acide et basique contenant de l'aluminium est réglé de manière à obtenir une concentration en alumine finale dans la suspension comprise entre 10 et 38 g/L, préférentiellement entre 13 et 35 g/L et plus préférentiellement entre 15 et 33 g/L.

De manière préférée, l'étape de co-précipitation est conduite à une température comprise entre 20 et 90 °C, et de manière plus préférée entre 30 et 70°C.

L'étape c) de précipitation est réalisée à un pH compris entre 7 et 10, de préférence entre 8 et 10, de manière préférée entre 8,5 et 10 et de manière très préférée entre 8,7 et 9,9.

L'étape c) de coprécipitation est réalisée pendant une durée comprise entre 1 et 60 minutes, et de manière préférée de 5 à 45 minutes.

De préférence, lesdites étapes a), b), et c) sont réalisées en l'absence d'additif organique.

De préférence la synthèse du gel d'alumine (étapes a), b) et c)) est opérée sous agitation.

**d) Étape de filtration**

De préférence, le procédé de préparation de l'alumine selon l'invention comprend également une étape de filtration de la suspension obtenue à l'issue de l'étape c).

Ladite étape de filtration est réalisée selon les méthodes connues de l'homme du métier.

Ladite étape de filtration est avantageusement suivie d'au moins une étape de lavage, avec une solution aqueuse, de préférence à l'eau et de préférence d'une à trois étapes de lavage, avec une quantité d'eau égale à la quantité de précipité filtré.

**e) Étape de séchage**

Conformément à l'invention, le gel d'alumine obtenu à l'issue de l'étape c) de précipitation, suivie d'une étape de filtration d), est séché dans une étape e) de séchage pour obtenir une poudre, ladite étape de séchage étant mise en œuvre avantageusement par séchage à une température supérieure ou égale à 120°C ou par atomisation ou par toute autre technique de séchage connue de l'homme du métier.

Dans le cas où ladite étape e) de séchage est mise en œuvre par séchage à une température supérieure ou égale à 120°C, ladite étape e) de séchage peut avantageusement être réalisée en étuve fermée et ventilée. De préférence ladite étape de séchage opère à une température comprise entre 120 et 300°C, de manière très préférée à une température comprise entre 150 et 250°C.

Dans le cas où ladite étape e) de séchage est mise en œuvre par atomisation, le gâteau obtenu à l'issue de l'étape de co-précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre.

De préférence, dans le cas où ladite étape e) de séchage est mise en œuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

**f) Étape de mise en forme**

Conformément à l'invention, la poudre obtenue à l'issue de l'étape e) de séchage est mise en forme dans une étape f) pour obtenir un matériau cru.

On entend par matériau cru, le matériau mis en forme et n'ayant pas subi d'étapes de traitement thermique.

De préférence, ladite étape f) de mise en forme est réalisée par malaxage extrusion, par granulation, par la technique de l'oil drop (égouttage ou coagulation de goutte en français), par pastillage.

De manière très préférée, ladite étape f) de mise en forme est réalisée par malaxage - extrusion.

La mise en forme est avantageusement réalisée avec un taux d'acide (total, exprimé par rapport à l'alumine sèche) compris entre 0 et 4% et préférentiellement entre 0,5 et 1,5%, un taux de neutralisation compris entre 0 et 200% et préférentiellement entre 0 et 40%. Les pertes au feu acide et basique sont avantageusement comprises entre 60 et 70%.

**g) Étape de traitement thermique**

Conformément à l'invention, le matériau cru obtenu à l'issue de l'étape f) de mise en forme subit ensuite une étape g) de traitement thermique à une température comprise entre 500 et 1000°C, pendant une durée avantageusement comprise entre 2 et 10 h, en présence ou non d'un flux d'air contenant jusqu'à 60% volume d'eau.

De préférence, ledit traitement thermique est effectué en présence d'un flux d'air contenant de l'eau.

De préférence, ladite étape g) de traitement thermique opère à une température comprise entre 540°C et 850°C.

De préférence, ladite étape g) de traitement thermique opère pendant une durée comprise entre 2h et 10h.

Ladite étape g) de traitement thermique permet la transition de la boehmite vers l'alumine finale.

L'étape de traitement thermique peut être précédée d'un séchage à une température comprise entre 50°C et 120°C, selon toute technique connue de l'homme du métier.

**Caractéristiques de l'oxyde poreux aluminiaue amorphe obtenu**

Le procédé de préparation selon l'invention permet l'obtention d'un oxyde poreux aluminique amorphe bimodal macroporeux et mésoporeux présentant un diamètre médian mésoporeux élevé, compris entre 18 nm et 26 nm, déterminé sur la courbe de distribution poreuse en volume par intrusion au porosimètre à mercure.

Le support oxyde aluminique mésoporeux préparé selon le procédé de l'invention est avantageusement dépourvu de micropores. L'absence de micropores est vérifiée par porosimétrie azote.

Le support oxyde aluminique mésoporeux selon l'invention présente avantageusement un volume mésoporeux, c'est-à-dire contenu dans les pores de diamètre compris entre 2 et 50 nm, tel que mesuré par intrusion au porosimètre à mercure, supérieur ou égal à 0,70 ml/g, de préférence supérieur ou égal à 0,75 ml/g.

Le volume poreux total mesuré par porosimétrie au mercure est avantageusement supérieur à 0,80 ml/g.

Le support oxyde aluminique mésoporeux selon l'invention comprend généralement un volume macroporeux, $V_{50nm}$, défini comme le volume des pores de diamètre supérieur à 50 nm, tel que mesuré par intrusion au porosimètre à mercure, compris entre 10 et 35% du volume poreux total et de préférence entre 15 et 30 % du volume poreux total. Dans un mode de réalisation très préféré, le volume macroporeux représente entre 20 et 30 % du volume poreux total.

Le support oxyde aluminique mésoporeux selon l'invention présente généralement une surface spécifique supérieure à 110 m$^2$/g.

Le support du catalyseur selon l'invention comprend pour sa majeure partie (au moins 90% poids) un oxyde aluminique tel que décrit ci-dessus et peut également contenir des dopants comme les éléments silicium, titane et zirconium (jusqu'à une teneur de 10 % poids).

Le support du catalyseur selon l'invention décrit ci-dessus est habituellement utilisé sous forme de poudre, de billes, de pastilles, de granulés ou d'extrudés, les opérations de mises en forme étant réalisées selon les techniques classiques connues de l'Homme du métier. Nous citons par exemple les méthodes de mise en forme par extrusion, par pastillage, par la méthode de la goutte d'huile, ou par granulation au plateau tournant.

**Préparation du catalyseur**

Le catalyseur selon l'invention est obtenu par dépôt du molybdène, éventuellement au moins un métal du groupe VIII de la classification périodique des élément choisi parmi le cobalt et/ou le nickel, et éventuellement d'autres éléments comme l'élément phosphore sur le support du catalyseur selon l'invention décrit ci-dessus.

Ledit dépôt peut être réalisé selon toutes les méthodes connues de l'Homme du métier.

En particulier, ledit dépôt sur l'alumine précédemment décrite peut être réalisé par l'ensemble des méthodes d'imprégnation connues de l'Homme du métier, dont l'imprégnation à sec. De façon préférée, le molybdène, éventuellement au moins un métal du groupe VIII de la classification périodique des élément choisi parmi le cobalt et/ou le nickel, et éventuellement l'élément phosphore sont déposés par imprégnation à sec de leurs composés associés sur le support oxyde selon l'invention. Le dépôt peut se faire via une seule étape d'imprégnation à sec du support oxyde selon l'invention via l'emploi d'une solution contenant simultanément au moins un composé du molybdène, éventuellement au moins un composé phosphoré, et éventuellement au moins un composé d'au moins un métal du groupe VIII choisi parmi le cobalt et/ou le nickel.

Le dépôt peut aussi être avantageusement réalisé via au moins deux cycles d'imprégnation à sec. Les différents éléments peuvent ainsi être avantageusement imprégnés successivement ou bien un des éléments peut aussi être imprégné en plusieurs séquences. Une des imprégnations qui est réalisée peut notamment servir à l'utilisation d'un composé organique que l'Homme du métier souhaite introduire en plus des éléments constitutifs du catalyseur final.

La(les)dite(s) solution(s) peu(ven)t être aqueuse(s), constituée(s) d'un solvant organique ou bien d'un mélange d'eau et d'au moins un solvant organique (par exemple l'éthanol ou le toluène). De préférence, la solution est aquo-organique et de manière encore plus préférée aquo-alcoolique. Le pH de cette solution peut être modifié par l'ajout éventuel d'un acide. Parmi les composés qui peuvent être introduits dans la solution en tant que sources d'éléments du groupe VIII, figurent avantageusement : les citrates, oxalates, carbonates, hydroxycarbonates, hydroxydes, phosphates, sulfates, aluminates, molybdates, tungstates, oxydes, nitrates, halogénures, par exemple, chlorures, fluorures, bromures, acétates, ou tout mélange des composés énoncés ici.

Concernant les sources de molybdène qui sont bien connues de l'Homme du métier, figurent avantageusement par exemple pour le molybdène et le tungstène : les oxydes, hydroxydes, acides molybdiques et tungstiques et leurs sels, en particulier les sels d'ammonium, heptamolybdate d'ammonium, l'acide phosphomolybdique, l'acide phosphotungstique et leurs sels. On utilise de préférence les oxydes ou les sels d'ammonium tels que le molybdate d'ammonium et l'heptamolybdate d'ammonium.

La source de phosphore préférée est l'acide orthophosphorique, mais ses sels et esters comme les phosphates alcalins, phosphate d'ammonium, phosphate de gallium ou phosphates d'alkyles conviennent également. Les acides phosphoreux, par exemple l'acide hypophosphoreux, l'acide phosphomolybdique et ses sels, l'acide phosphotungstique et ses sels peuvent être avantageusement employés.

Un agent chélatant de nature organique peut avantageusement être introduit dans la solution si l'Homme du métier le juge nécessaire.

De manière préférée, la totalité de la phase métallique est introduite à la fin de la préparation du support et aucune étape supplémentaire n'est donc nécessaire.

De préférence, on choisit d'imprégner en une fois le molybdène, éventuellement au moins un métal du groupe VIII de la classification périodique des élément choisi parmi le cobalt et/ou le nickel, et éventuellement l'élément phosphore sur le support oxyde aluminique préalablement obtenu, selon n'importe laquelle des méthodes d'imprégnation précédemment décrite.

Le produit est alors généralement mûri, séché et optionnellement calciné sous atmosphère oxydante, par exemple sous air, habituellement à une température d'environ 300 à 600°C, de préférence 350 à 550°C.

Dans un mode de réalisation, le catalyseur selon l'invention décrit ci-dessus subit une étape de traitement thermique ou hydrothermique.

De préférence, ce traitement est généralement réalisé en deux temps. Dans un premier temps, on sèche le solide à une température inférieure à 200°C sous air, de préférence inférieure à 150°. Dans un second temps, on réalise une calcination sous air, sans ajout supplémentaire d'eau, à une température de préférence comprise entre 300 et 600°C, et de manière très préférée, comprise entre 400 et 500°C.

Dans un autre mode de réalisation, le catalyseur ne subit pas d'étape complémentaire de traitement thermique ou hydrothermique, et le catalyseur est seulement avantageusement séché. Dans ce cas, la température de séchage est inférieure à 200°C.

Le catalyseur selon la présente invention est avantageusement utilisé sous forme totalement ou partiellement sulfurée. Il subit donc avant utilisation une étape d'activation sous atmosphère sulfo-réductrice selon toute méthode connue de l'Homme du métier, de manière in situ ou ex situ.

Le traitement de sulfuration peut être effectué ex situ (avant l'introduction du catalyseur dans le réacteur d'hydrotraitement/hydroconversion) ou in situ au moyen d'un agent organosoufré précurseur d'H2S, par exemple le DMDS (diméthyldisulfure),

**Procédés d'utilisation du catalyseur selon l'invention**

L'invention décrit l'utilisation d'un catalyseur comprenant au moins un métal du groupe VI B, éventuellement au moins un métal du groupe VIII, éventuellement du phosphore, et un support oxyde de aluminique, dans un procédé d'hydrotraitement de charges lourdes telles que les résidus pétroliers (atmosphériques ou sous vide).

Les procédés selon l'invention mettent avantageusement en œuvre le catalyseur décrit selon l'invention dans des procédés d'hydrotraitement permettant de convertir des charges hydrocarbonées lourdes contenant des impuretés soufrées et des impuretés métalliques.

De manière générale, les procédés d'hydrotraitement permettant de convertir des charges hydrocarbonées lourdes, contenant des impuretés soufrées et des impuretés métalliques, opèrent à une température comprise entre 320 et 450°C, sous une pression partielle d'hydrogène comprise entre 3 MPa et 30 MPa, à une vitesse spatiale avantageusement comprise entre 0,05 et 10 volumes de charge par volume de catalyseur et par heure, et avec un rapport hydrogène gazeux sur charge liquide d'hydrocarbures avantageusement compris entre 100 et 5000 normaux mètres cubes par mètres cubes.

Un objectif recherché par l'utilisation des catalyseurs de la présente invention concerne une amélioration des performances en particulier en hydrodémétallation par rapport aux catalyseurs connus de l'art antérieur. Le catalyseur décrit permet une amélioration en hydrodémétallation (HDM) et en hydrodésasphaltage par rapport aux catalyseurs conventionnels, tout en présentant une grande stabilité dans le temps.

**Charges**

Les charges traitées dans le procédé selon l'invention sont avantageusement choisies parmi les résidus atmosphériques, les résidus sous vide issus de la distillation directe, les huiles désasphaltées, les résidus issus des procédés de conversion tels que par exemple ceux provenant du coking, d'une hydroconversion en lit fixe, en lit bouillonnant, ou encore en lit mobile, pris seuls ou en mélange. Ces charges peuvent avantageusement être utilisées telles quelles ou encore diluées par une fraction hydrocarbonée ou un mélange de fractions hydrocarbonées pouvant être choisies parmi les produits issus du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommées selon la terminologie anglo-saxonne VGO (Vacuum Gas Oil). Les charges lourdes peuvent ainsi avantageusement comprendre des coupes issues du procédé de liquéfaction du charbon, des extraits aromatiques, ou toute autre coupe hydrocarbonée.

Lesdites charges lourdes présentent généralement plus de 1% en poids de molécules ayant un point d'ébullition supérieur à 500°C, une teneur en métaux cumulée (par exemple Ni+V) supérieure à 1 ppm poids, de préférence supérieure à 20 ppm poids, de manière très préférée supérieure à 50 ppm poids, une teneur en asphaltènes, précipités dans l'heptane, supérieure à 0,05% en poids, de préférence supérieure à 1% en poids, de manière très préférée supérieure à 2%.

Les charges lourdes peuvent avantageusement aussi être mélangées avec du charbon sous forme de poudre, ce mélange étant généralement appelé slurry. Ces charges peuvent avantageusement être des sous-produits issus de la conversion du charbon et mélangés de nouveau à du charbon frais. La teneur en charbon dans la charge lourde est généralement et de préférence un ratio ¼ (Oil/Coal) et peut avantageusement varier largement entre 0,1 et 1. Le charbon peut contenir de la lignite, être un charbon sub-bitumineux (selon la terminologie anglo-saxonne), ou encore bitumineux. Tout autre type de charbon convient pour l'utilisation de l'invention, à la fois dans des réacteurs à lit fixe ou dans des réacteurs fonctionnant en lit bouillonnant.

Conformément à l'invention, le catalyseur selon celle-ci est préférentiellement utilisé dans les premiers lits catalytiques d'un procédé comprenant successivement au moins une étape d'hydrodémetallation et au moins une étape d'hydrodésulfuration. Le procédé selon l'invention est avantageusement mis en œuvre dans un à dix réacteurs successifs, le ou les catalyseur(s) selon l'invention pouvant avantageusement être chargés dans un ou plusieurs réacteurs et/ou dans tout ou partie des réacteurs.

Dans un mode de réalisation préféré, des réacteurs permutables, c'est à dire des réacteurs fonctionnant en alternance, dans lequel des catalyseurs d'hydrodématallation (HDM) selon l'invention peuvent de préférence être mis en œuvre, peuvent être utilisés en amont de l'unité. Dans ce mode de réalisation préféré, les réacteurs permutables sont suivis ensuite par des réacteurs en série, dans lequel sont mis en oeuvre des catalyseurs d'hydrodésulfuration (HDS) qui peuvent être préparés selon toute méthode connue de l'Homme du métier.

Dans un mode de réalisation très préféré, deux réacteurs permutables sont utilisés en amont de l'unité, avantageusement pour l'HDM et contenant un ou plusieurs catalyseurs selon l'invention. Ils sont suivis avantageusement par un à quatre réacteurs en série, avantageusement utilisés pour l'HDS.

Le procédé selon l'invention peut avantageusement être mis en œuvre en lit fixe avec pour objectif l'élimination des métaux et du soufre et d'abaisser le point d'ébullition moyen des hydrocarbures. Dans le cas où le procédé selon l'invention est mis en œuvre en lit fixe, la température de mise en œuvre est avantageusement comprise entre 320°C et 450°C, de préférence 350°C à 410°C, sous une pression partielle en hydrogène avantageusement comprise entre 3 MPa et 30 MPa, de préférence entre 10 et 20 MPa, à une vitesse spatiale avantageusement comprise entre 0,05 et 5 volume de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes.

Le procédé selon l'invention peut aussi avantageusement être mis en œuvre pour partie en lit bouillonnant sur les mêmes charges. Dans le cas où le procédé selon l'invention est mis en œuvre en lit bouillonnant, le catalyseur est avantageusement mis en œuvre à une température comprise entre 320 et 450°C, sous une pression partielle d'hydrogène avantageusement comprise entre 3 MPa et 30 MPa, de préférence entre 10 et 20 MPa, à une vitesse spatiale avantageusement comprise entre 0,1 et 10 volumes de charge par volume de catalyseur et par heure, de préférence entre 0,5 et 2 volumes de charge par volume de catalyseur et par heure, et avec un rapport hydrogène gazeux sur charge liquide d'hydrocarbures avantageusement compris entre 100 et 3000 normaux mètres cubes par mètres cubes, de préférence entre 200 à 1200 normaux mètres cubes par mètres cubes.

Selon un mode de réalisation préféré, le procédé selon l'invention est mis en œuvre en lit fixe.

Avant leur mise en œuvre dans le procédé selon l'invention, les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà connue déjà décrite dans la littérature. Une méthode de sulfuration classique bien connue de l'Homme du métier consiste à chauffer le mélange de solides sous flux d'un mélange hydrogène et hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Le traitement de sulfuration peut être effectué ex situ (avant l'introduction du catalyseur dans le réacteur d'hydrotraitement/hydroconversion) ou in situ au moyen d'un agent organosoufré précurseur d'$H_2S$, par exemple le DMDS (diméthyldisulfure),

Les exemples suivants illustrent l'invention sans toutefois en limiter la portée.

## EXEMPLES

### Exemple 1 : Préparation des supports de catalyseur A, AA et CA (selon l'invention)

### Préparation des supports A et CA

En vue de la préparation des supports de catalyseurs A et CA, on prépare 5 l de solution à une concentration fixée à 15 g/l en alumine finale et avec un taux de contribution de la première étape à 2,1% en poids de l'alumine finale.

### Étape a) de mise en solution :

On introduit 39 mL de sulfate d'aluminium dans le réacteur contenant le pied d'eau en une fois. L'évolution du pH, qui reste compris entre 2,5 et 3, est suivie pendant 10 min.

### Étape b) d'ajustement du pH :

Après l'étape de mise en solution du sulfate d'aluminium, on ajoute progressivement environ 40 mL d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :

567 mL de sulfate d'aluminium, soit un débit de 20 mL/min,
567 mL d'aluminate de sodium, soit un débit de 19 mL/min,
639 mL d'eau distillée, soit un débit de 22 mL/min.

Le pH de co-précipitation est maintenu entre 7 et 10 en contrôlant en priorité le débit de la pompe d'aluminate de sodium.

A la fin de la synthèse, la suspension est filtrée et lavée plusieurs fois.

Le gâteau est sur-séché à l'étuve pendant au minimum une nuit à 200°C. On obtient la poudre que l'on doit mettre en forme.

Les caractéristiques principales du gel obtenu et engagé dans la mise en forme sont rappelées dans le Tableau 1.

Tableau 1 : Caractéristique type du gel utilisé pour la préparation de l'alumine.

| Phase détectée en DRX | Perte au feu (%m/m) | Teneur en S (ppm) | Teneur en Na (ppm) |
|---|---|---|---|
| Boehmite | 20,7 | 350 | 60 |

## Mise en forme du gel d'alumine

La mise en forme est réalisée sur malaxeur de type Brabender avec un taux d'acide (total, exprimé par rapport à l'alumine sèche) de 1%, un taux de neutralisation de 20% et des pertes au feu acide et basique respectivement de 62 et 64%.

L'extrusion est effectuée sur une extrudeuse à piston (vitesse d'extrusion 50cm/min et filière trilobée de diamètre 2,1 mm).

Calcination : Les extrudés obtenus sont séchés à 100°C pendant une nuit, puis calcinés,

- soit 2h à 800°C sous flux d'air humide en four tubulaire (VVH=1 l/h/g avec 50%v/v d'eau) pour conduire au support A,
- soit 2h à 700°C sous flux d'air humide en four tubulaire (VVH=1 l/h/g avec 30%v/v d'eau, ce qui conduit aux extrudés du support CA.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

## Préparation du support AA

En vue de la préparation du support de catalyseur AA, on prépare 5 l de solution à une concentration fixée à 27 g/l en alumine finale et avec un taux de contribution de la première étape à 2,1% en poids de l'alumine finale.

Les concentrations des précurseurs d'aluminium utilisées sont les suivantes : $Al_2(SO_4)$ à 102 g/l en $Al_2O_3$ et NaAlOO à 155 g/l en $Al_2O_3$. L'agitation est de 350 rpm tout au long de la synthèse.

### Étape a) de mise en solution :

On introduit 70 ml de sulfate d'aluminium dans le réacteur contenant le pied d'eau en une fois. L'évolution du pH, qui reste compris entre 2,5 et 3, est suivie pendant 10 min.

### Étape b) d'ajustement du pH :

Après l'étape de mise en solution du sulfate d'aluminium, on ajoute progressivement environ 70 ml d'aluminate de sodium. L'objectif est d'atteindre un pH compris entre 7 et 10 en une durée de 5 à 15 min.

### Étape c) de co-précipitation :

Dans la suspension obtenue à l'étape b) sont ajoutés en 30 min :

1020 ml de sulfate d'aluminium, soit un débit de 34 ml/min,
1020 ml d'aluminate de sodium, soit un débit de 34 ml/min,
1150 ml d'eau distillée, soit un débit de 38,3 ml/min.

Le pH de co-précipitation est maintenu entre 7 et 10 en contrôlant en priorité le débit de la pompe d'aluminate de sodium.

A la fin de la synthèse, la suspension est filtrée et lavée plusieurs fois.

Le gâteau est sur-séché à l'étuve pendant au minimum une nuit à 200°C. On obtient la poudre que l'on doit mettre en forme.

Les caractéristiques principales du gel obtenu et engagé dans la mise en forme sont rappelées Tableau 2.

Tableau 2 : Caractéristique type du gel utilisé pour la préparation de l'alumine.

| Phase détectée en DRX | Perte au feu (%m/m) | Teneur en S (ppm) | Teneur en Na (ppm) |
|---|---|---|---|
| Boehmite | 20,7 | 350 | 60 |

**Mise en forme du gel d'alumine**

La mise en forme est réalisée sur malaxeur de type Brabender avec un taux d'acide (total, exprimé par rapport à l'alumine sèche) de 1%, un taux de neutralisation de 20% et des pertes au feu acide et basique respectivement de 62 et 64%.

L'extrusion est effectuée sur une extrudeuse à piston (vitesse d'extrusion 50 cm/min et filière trilobée de diamètre 2,1mm).

Calcination : Les extrudés obtenus sont séchés à 100°C pendant une nuit, puis calcinés 2h à 800°C sous flux d'air humide en four tubulaire (VVH=1 l/h/g avec 50%v/v d'eau).

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

**Exemple 2 : Préparation du support de catalyseur B (comparatif)**

Les concentrations des précurseurs d'aluminium utilisées sont les suivantes : $Al_2(SO_4)$= à 102 g/l en $Al_2O_3$ et NaAlOO à 155 g/l en $Al_2O_3$. L'agitation est de 350 rpm tout au long de la synthèse.

La première étape consiste en une déshydratation rapide de 20,61g de gibbsite à haute température (800°C) et à faible temps de contact (0,8 seconde), permettant l'obtention d'une poudre d'alumine de transition $\chi$ (chi).

Un lavage permettant la diminution de la teneur en $Na_2O$ a été effectué à l'aide d'eau (3 kg/kg d'$Al_2O_3$), suivi d'un second traitement de déshydratation rapide similaire au précédent, permettant également d'obtenir une poudre d'alumine.

Cette poudre est mise en forme par granulation dans un drageoir.

Un traitement hydrothermal est effectué à forte pression partielle d'eau (100%) pendant 8 h. Les billes ainsi obtenues ont été séchées à 150°C, puis calcinées à 600°C.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

**Exemple 3 : Préparation des supports de catalyseur D et CD (comparatifs).**

En vue de la préparation des supports de catalyseurs D et CD, on prépare 5 l de solution à une concentration fixée à 40 g/l en alumine finale (non-conforme) et avec un taux de contribution de la première étape à 2,1% en poids de l'alumine totale.

Les concentrations des précurseurs d'aluminium utilisées sont les suivantes : $Al_2(SO_4)$= à 102 g/L en $Al_2O_3$ et NaAlOO à 155 g/L en $Al_2O_3$. L'agitation est de 350 rpm tout au long de la synthèse.

**Étape a) de mise en solution :**

On introduit 103 ml de sulfate d'aluminium dans le réacteur contenant le pied d'eau en une fois. L'évolution du pH, qui reste compris entre 2,5 et 3, est suivie pendant 10 min.

**Étape b) d'ajustement du pH :**

Après l'étape de mise en solution du sulfate d'aluminium, on ajoute progressivement environ 103 ml d'aluminate de sodium. L'objectif est d'atteindre un pH compris entre 7 et 10 en une durée de 5 à 15 min.

**Étape c) de co-précipitation :**

Dans la suspension obtenue à l'étape b) sont ajoutés en 30 min :

1515 ml de sulfate d'aluminium, soit un débit de 51 ml/min,
1515 ml d'aluminate de sodium, soit un débit de 51 ml/min,
1710 ml d'eau distillée, soit un débit de 58 ml/min.

Le pH de co-précipitation est maintenu entre 7 et 10 en contrôlant en priorité le débit de la pompe d'aluminate de sodium.

A la fin de la synthèse, la suspension est filtrée et lavée plusieurs fois.

Le gâteau est sur-séché à l'étuve pendant au minimum une nuit à 200°C. On obtient la poudre que l'on doit mettre en forme.

**Mise en forme du gel d'alumine**

La mise en forme est réalisée sur malaxeur de type Brabender avec un taux d'acide (total, exprimé par rapport à l'alumine sèche) de 1%, un taux de neutralisation de 20% et des pertes au feu acide et basique respectivement de 62 et 64%.

L'extrusion est effectuée sur une extrudeuse à piston (vitesse d'extrusion 50cm/min et filière trilobée de diamètre 2,1mm).

Les extrudés obtenus sont séchés à 100°C pendant une nuit, puis calcinés,

- soit 2h à 800°C sous flux d'air humide en four tubulaire (VVH=1 l/h/g avec 50%v/v d'eau) pour conduire au support D,
- soit 2h à 700°C sous flux d'air humide en four tubulaire (VVH=1 l/h/g avec 30%v/v d'eau, ce qui conduit aux extrudés du support CD.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

**Exemple 4 : Préparation des supports de catalyseur E et CE, selon le brevet US7790562 (comparatifs).**

On réalise dans un premier temps la synthèse d'un gel d'alumine non-conforme en ce qu'il est synthétisé selon le procédé de préparation décrit dans le brevet US 7 790 562.

La synthèse est réalisée dans un réacteur de 7 l et une suspension finale de 5 l en 2 étapes de précipitation. La quantité d'eau ajoutée dans le réacteur est de 3960 ml.
La concentration finale en alumine visée est de 30g/l.

Une première étape de co-précipitation de sulfate d'aluminium $Al_2(SO_4)$ et d'aluminate de sodium NaAlOO est réalisée à 30°C et pH=9,3 pendant une durée de 8 minutes. Les concentrations des précurseurs d'aluminium utilisées sont les suivantes : $Al_2(SO_4)$= à 102g/l en $Al_2O_3$ et NaAlOO à 155g/l en $Al_2O_3$. L'agitation est de 350 rpm tout au long de la synthèse.

Une solution de sulfate d'aluminium $Al_2(SO_4)$ est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenue à 30°C.

Une suspension contenant un précipité d'alumine est obtenue.

La concentration finale en alumine visée étant de 30g/l, le débit des précurseurs sulfate d'aluminium $Al_2(SO_4)$ et aluminate de sodium NaAlOO contenant de l'aluminium introduit dans la première étape de précipitation sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisée par ajout de sulfate d'aluminium $Al_2(SO_4)$ à une concentration de 102 g/l en $Al_2O_3$ et d'aluminate de sodium NaAlOO à une concentration de 155 g/l en $Al_2O_3$. Une solution de sulfate d'aluminium $Al_2(SO_4)$ est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.

Une suspension contenant un précipité d'alumine est obtenue.

La concentration finale en alumine visée étant de 30g/l, le débit des précurseurs sulfate d'aluminium $Al_2(SO_4)$ et aluminate de sodium NaAlOO contenant de l'aluminium introduit dans la deuxième étape de précipitations sont respectivement de 12,8 ml/min et 14,1 ml/min.

Ces débits de précurseurs acide et basique contenant de l'aluminium permettent d'obtenir à l'issue de la deuxième étape de précipitation un taux d'avancement de 70%.

La suspension obtenue est ensuite filtrée par déplacement d'eau sur un outil type Buchner fritté et le gel d'alumine obtenu est lavé 3 fois avec 5 l d'eau distillée à 70°C.

**Mise en forme du gel d'alumine**

La mise en forme est réalisée sur malaxeur de type Brabender avec un taux d'acide (total, exprimé par rapport à l'alumine sèche) de 3%, un taux de neutralisation de 40% et des pertes au feu acide et basique respectivement de 61 et 63%.

L'extrusion est effectuée sur une extrudeuse à piston (vitesse d'extrusion 50cm/min et filière trilobée de diamètre 2,1mm).

Calcination : Les extrudés obtenus sont séchés à 100°C pendant une nuit, puis calcinés :

- soit 2h à 800°C sous flux d'air humide en four tubulaire (VVH=1 l/h/g avec 50%v/v d'eau) : ces extrudés donnent le support E.
- Soit 2h à 700°C sous flux d'air humide en four tubulaire (VVH=1 l/h/g avec 30%v/v d'eau, ce qui conduit aux extrudés du support CE.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

Tableau 3 : Supports synthétisés

|  | A | AA | CA | B | D | CD | E | CE | F |
|---|---|---|---|---|---|---|---|---|---|
|  | selon l'invention | | | comparatifs | | | | | |
| Volume poreux total (ml/g) | 1,01 | 1,00 | 1,00 | 0,93 | 0,80 | 0,81 | 0,74 | 0,74 | 0,95 |
| Volume mésoporeux (ml/g) | 0,79 | 0,77 | 0,80 | 0,60 | 0,71 | 0,70 | 0,72 | 0,73 | 0,61 |
| Volume macroporeux (ml/g) | 0,22 | 0,23 | 0,20 | 0,33 | 0,09 | 0,11 | 0,02 | 0,01 | 0,34 |
| %Vmacro | 22% | 23% | 20% | 36% | 11% | 14% | 3 % | 2% | 36% |
| Dp $_{méso}$ (nm) | 21,2 | 23,3 | 18,2 | 19,7 | 16,1 | 13,2 | 17,1 | 15,4 | 12,0 |
| Dp $_{macro}$ (nm) | 248 | 252 | 248 | 600 | 200 | 200 | - | - | 600 |
| $S_{BET}$ (m²/g) | 157 | 129 | 174 | 141 | 180 | 233 | 163 | 181 | 197 |

**Exemple 5 : Préparation des catalyseurs A1, AA1, CA1 (conformes), B1, D1, CD1, E1, CE1 (comparatifs)**

Les catalyseurs A1, AA1, CA1, B1, D1, CD1, E1, CE1 ont été préparés respectivement à partir des supports A, AA, CA, B, D, CD, E, et CE. Pour ce faire, la méthode de l'imprégnation à sec a été employée. La solution aqueuse de l'imprégnation contient des sels du molybdène, du nickel ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel $Ni(NO_3)_2.6H_2O$. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120°C puis calcinés à 500°C durant 2 heures sous air. La teneur cible en trioxyde de molybdène est de 6% poids, celle en oxyde de nickel est de 1,5% poids, et celle du pentaoxyde de phosphore est de 1,2% poids. Le rapport atomique P/Mo est égal à 0,4 et le rapport atomique Ni/Mo est égal à 0,49. Les concentrations en solutions ont donc été ajustées pour satisfaire à cette cible, en tenant compte du volume de reprise en eau des différents supports, ce dernier étant déterminé classiquement, comme cela est bien connu de l'Homme du métier.

**Exemple 6** : **Évaluation en HDT de résidus des catalyseurs A1, AA1, CA1 (selon l'invention) en comparaison avec les catalyseurs B1, D1, CD1, E1, CE1 (comparatifs)**

Les catalyseurs A1, CA1 et AA1 préparés selon l'invention, mais aussi les catalyseurs comparatifs B1, D1, CD1, E1, CE1 ont été soumis à un test catalytique en réacteur batch parfaitement agité, sur une charge de type résidu sous vide RSV Safanyia (Arabian Lourd), voir caractéristiques dans le Tableau 4).

Tableau 4 : Caractéristiques de la charge RSV Safanyia utilisée

|  |  | RSV Safanyia |
|---|---|---|
| Densité 15/4 |  | 1,0290 |
| Viscosité à 100°C | mm$^2$/s | 1678 |
| Soufre | % pds | 5,05 |
| Azote | ppm | 3724 |
| Nickel | ppm | 47 |
| Vanadium | ppm | 148 |
| Carbone conradson | % pds | 20 |
| Asphaltènes C7 | % pds | 14 |
| SARA |  |  |
| Saturés | % pds | 11 |
| Aromatiques | % pds | 39 |
| Résines | % pds | 34 |
| Asphaltènes | % pds | 14 |
| Distillation simulée |  |  |
| PI | °C |  |
| 5% | °C | 459,6 |
| 10% | °C | 490,0 |
| 20% | °C | 531,2 |
| 30% | °C | 566,2 |
| 40% | °C | 597,6 |
| DS : PF °C | °C | 611,1 |
| DS : res disti | %pds | 44,0 |

Pour ce faire, après une étape de sulfuration ex-situ par circulation d'un mélange gazeux H$_2$S/H$_2$ durant 2 heures à 350°C, un volume de 15 ml de catalyseur est chargé à l'abri de l'air dans le réacteur batch, puis est recouvert de 90 ml de charge. Les conditions opératoires appliquées sont ensuite les suivantes :

Tableau 5 : Conditions opératoires mises en œuvre en réacteur batch

| Pression totale | 9,5 MPa |
|---|---|
| Température de test | 370°C |
| Durée de l'essai | 3 heures |

A la fin de l'essai, le réacteur est refroidi et après un triple strippage de l'atmosphère sous azote (10 minutes à 1 MPa), l'effluent est recueilli et analysé par fluorescence des rayons X (soufre et métaux) et par distillation simulée (ASTM D7169).

Le taux d'hydrodésulfuration HDS est défini de la façon suivante :

$$HDS\ (\%) = ((\%\ pds\ S)_{charge}-(\%\ pds\ S)_{recette})/(\%\ pds\ S)_{charge} \times 100$$

De la même manière, le taux d'hydrodémétallation HDM est défini de la façon suivante :

$$HDM\ (\%) = ((ppm\ pds\ Ni+V)_{charge}-(ppm\ pds\ Ni+V)_{recette})/(ppm\ pds\ Ni+V)_{charge} \times 100$$

Enfin, le taux de conversion de la fraction 540°C+ est définie par la relation suivante :

$$HDX_{540+}\ (\%) = ((X_{540+})_{charge}-(X_{540+})_{effluent})/(X_{540+})_{charge} \times 100$$

Les performances des catalyseurs sont résumées dans le Tableau 6.

Tableau 6 : Performances en hydrodésulfuration HDS, hydrodémétallation HDM et hydroconversion HDX des catalyseurs A1, AA1, CA1 en comparaison avec les catalyseurs B1, D1, CD1, E1, CE1

| Catalyseurs | HDS (%) | HDM (%) |
|---|---|---|
| **A1 (selon l'invention)** | **47,3** | **81,2** |
| **AA1 (selon l'invention)** | **43,8** | **81,1** |
| **CA1 (selon l'invention)** | **48,6** | **79,1** |
| B1 (comparatif) | 47,5 | 77,5 |
| D1 (comparatif) | 48,1 | 74,4 |
| CD1 (comparatif) | 49,3 | 71,4 |
| E1 (comparatif) | 51,4 | 76,5 |
| CE1 (comparatif) | 52,8 | 70,4 |

On déduit du Tableau 6 que la mise en œuvre des catalyseurs de la présente invention engendre un gain significatif en hydrodémétallation (HDM) qui n'est jamais observé pour les différentes textures de l'art existant. Une légère dégradation en hydrodésulfuration (HDS) est observée, mais n'est pas rédhibitoire dans l'objectif de réaliser des essais en enchaînement, comme c'est le cas industriellement.

En pratique, l'origine des écarts d'activité s'explique par le fait que les supports conformes A, AA, CA1 présentent simultanément un volume mésoporeux au-dessus de 0,75 ml/g, un diamètre poreux au moins égal à 18 nm, un volume macroporeux d'au moins 15% du volume total et une $S_{BET}$ supérieure à 100 m²/g. Au contraire, les supports CD et CE présentent des diamètres poreux trop faibles, les supports D, E, CD et CE présentent des volumes macroporeux trop faibles et le support B présente un volume mésoporeux trop faible.

**Exemple 7 : Évaluation en hydrotraitement en lit fixe des catalyseurs A1, AA1, CA1 selon l'invention et comparaison avec les performances catalytiques des catalyseurs B1, D1, et E1**

Les catalyseurs A1, AA1, CA1 décrits préparés selon l'invention ont été comparés en test d'hydrotraitement de résidus pétroliers avec en comparaison les performances des catalyseurs B1, D1 et E1. La charge est constituée d'un mélange entre un résidu atmosphérique (RA) d'origine Moyen Orient (Arabian médium) et un résidu sous vide (Arabian Light). Deux mélanges distincts ont été réalisés pour ces évaluations. Les charges correspondantes se caractérisent respectivement par de fortes teneurs en carbone Conradson (13,2 et 14,4 % en poids) et asphaltènes (5,2 et 6,1 % en poids) et une quantité élevée de nickel (22 à 25 ppm en poids), vanadium (67 à 79 ppm en poids) et soufre (3,86 à 3,90 % en poids). Les caractéristiques complètes de ces charges sont reportées dans le Tableau 7.

Tableau 7 : Caractéristiques des charges n°1 et n°2 utilisées pour les essais

| | | Mix RA AM/RSV AL Charge n°1 | Mix RA AM/RSV AL Charge n°2 |
|---|---|---|---|
| Densité 15/4 | 15/4 | 0,9920 | 0,9886 |
| Soufre | % pds | 3,90 | 3,86 |
| Azote | ppm | 2995 | 2800 |
| Nickel | ppm | 25 | 22 |
| Vanadium | ppm | 79 | 67 |
| Carbone Conradson | % pds | 14,4 | 13,2 |
| Asphaltènes C7 | % pds | 6,1 | 4,6 |
| Distillation simulée | | | |
| PI | °C | 265 | 261 |
| 5% | °C | 366 | 362 |
| 10% | °C | 408 | 403 |
| 20% | °C | 458 | 454 |
| 30% | °C | 502 | 497 |
| 40% | °C | 542 | 536 |
| 50% | °C | 576 | 571 |
| 60% | °C | 609 | 603 |
| 70% | °C | - | - |
| 80% | °C | - | - |
| 90% | °C | - | - |
| DS : PF °C | °C | 616 | 614 |
| DS : res disti | %pds | 61 | 63 |

Après une étape de sulfuration par circulation dans le réacteur d'une coupe gazole additionnée de DMDS à une température finale de 350°C, on opère l'unité avec le résidu pétrolier décrit ci-dessous dans les conditions opératoires du Tableau 8.

Tableau 8 : Conditions opératoires mises en œuvre en réacteur en lit fixe

| | |
|---|---|
| Pression totale | 15 MPa |
| Température de test | 370°C |
| Vitesse spatiale horaire du résidu | 0,8 h$^{-1}$ |
| Débit d'hydrogène | 1200 std l. $_{H2}$/l. $_{charge}$ |

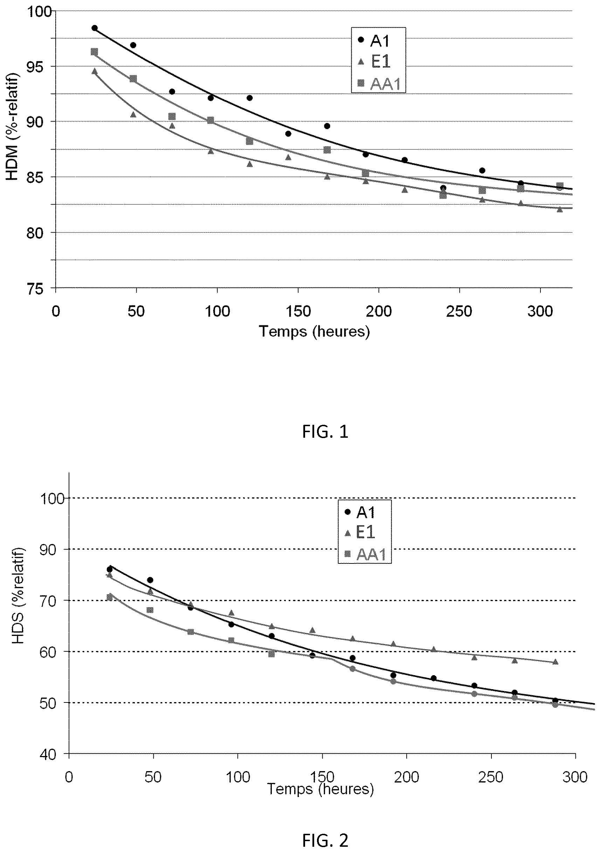

On injecte le mélange de charges RA AM/RSV AL, puis on monte à la température de l'essai. Après une période de stabilisation de 300 heures, les performances en hydrodésulfuration (HDS) et en hydrodémétallation (HDM) sont relevées, ainsi qu'en hydroconversion du RSV (coupe 540°C+). Dans la suite les performances sont présentées en conversions relative par rapport à la référence (positionnée à zéro dans les tableaux 9 et 10) ou sur une échelle relative où l'activité est normalisée à 100 sur les Figures 1 à 4. Le 100 ne représente donc pas le niveau zéro dans l'effluent.

Pour la première série de catalyseurs évaluée avec la charge n°1, on confirme les résultats de l'exemple 4, c'est-à-dire l'augmentation des performances en hydrodémétallation HDM des catalyseurs selon l'invention par rapport aux catalyseurs de référence (Figures 1 et 2).

Tableau 9 : Performances HDS, HDM et HDX des catalyseurs A1, AA1, et E1 sur la charge n°1

| Catalyseurs | HDS (%) | HDM (%) |
|---|---|---|
| **A1 (selon l'invention)** | **base** | **base** |
| AA1 (selon l'invention) | -0.8 | -0.2 |
| E1 | +7.6 | -1.6 |

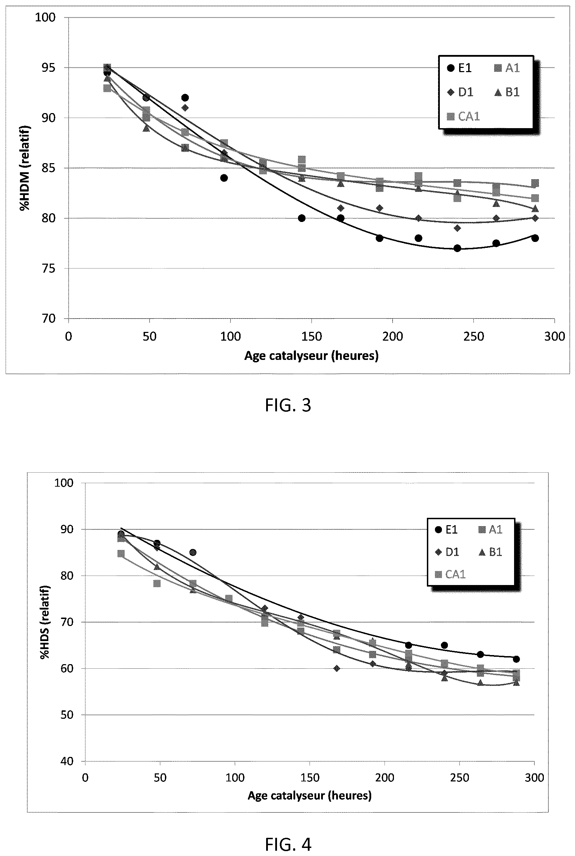

Pour la seconde série (A1, CA1, B1, D1, E1), évaluée sur la charge n°2, là encore les performances en hydrodémétallation HDM des catalyseurs préparés selon l'invention dépassent significativement celles des catalyseurs de l'art antérieur (Figures 3 et 4).

Tableau 10 : Performances HDS, HDM et HDX des catalyseurs A1, CA1 B1, D1 et E1 sur la charge n°2

| Catalyseurs | HDS (%) | HDM (%) |
|---|---|---|
| **A1 (selon l'invention)** | **base** | **base** |
| CA1 | +0,5 | -1,0 |
| B1 | -0,8 | -1,8 |
| D1 | +0,4 | -2,4 |
| E1 | +3,3 | -4,9 |

**Exemple 8 : Préparation d'un catalyseur selon les caractéristiques du brevet US6780817 - Catalyseur F1 à partir du support F**

Le support F a été préparé en suivant le mode de préparation de l'exemple 3 du brevet US 6, 780, 817.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°. L'absence de microporosité est vérifiée par porosimétrie azote. Ces données sont résumées dans le Tableau 3.

Le catalyseur F1 a été préparé à partir du support F précédemment obtenu. Pour ce faire, la méthode de l'imprégnation à sec a été employée. La solution aqueuse de l'imprégnation contient des sels du molybdène, du nickel ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel $Ni(NO_3)_2.6H_2O$. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120°C puis calcinés à 500°C durant 2 heures sous air. La teneur cible en trioxyde de molybdène est de 6% poids, celle en oxyde de nickel est de 1,5% poids, et celle du pentaoxyde de phosphore est de 1,2% poids. Le rapport atomique P/Mo est égal à 0,4 et le rapport atomique Ni/Mo est égal à 0,49. Les concentrations en solutions ont donc été ajustées pour satisfaire à cette cible, en tenant compte du volume de reprise en eau des différents supports, ce-dernier étant déterminé classiquement, comme cela est bien connu de l'Homme du métier.

**Exemple 9 : Évaluation du catalyseur comparatif F1**

L'évaluation du catalyseur comparatif F1 dans les conditions de l'exemple 6, sur la charge n°1 met en évidence un net déficit de performances en hydrodémétallation HDM et hydrodésulfuration HDS qui souligne l'importance d'associer un fort volume macroporeux avec un diamètre de mésopores élevé.

Tableau 11 : Performances HDS, HDM et HDX des catalyseurs A1, E1, et F1 sur la charge n°1

| Catalyseurs | HDS (%) | HDM (%) |
|---|---|---|
| **A1 (selon l'invention)** | **base** | **base** |
| F1 | -5.8 | -5.3 |
| E1 | +7.6 | -1.6 |

**Exemple 10 : Préparation et évaluation des catalyseurs A2, AA2, et A3, AA3, en comparaison avec A1 et AA1 préparés selon l'invention et E1, E2 et E3 non conformes à la présente invention**

Les catalyseurs A2, AA2, A3, AA3, et E2, E3 ont été préparés à partir des supports A et AA, et E en accord avec leur nomenclature. Pour ce faire, la méthode de l'imprégnation à sec a été employée. La solution aqueuse de l'imprégnation contient des sels du molybdène, du nickel ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel $Ni(NO_3)_2.6H_2O$. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120°C, puis calcinés à 500°C durant 2 heures sous air.

Pour les catalyseurs A2, AA2, E2 la teneur cible en trioxyde de molybdène est de 8% poids, celle en oxyde de nickel est de 1,5% poids, et celle du pentaoxyde de phosphore est de 2,3% poids. Le rapport atomique P/Mo est égal à 0,58 et le rapport atomique Ni/Mo est égal à 0,37. Les concentrations en solutions ont donc été ajustées pour satisfaire à cette cible, en tenant compte du volume de reprise en eau des différents supports, ce-dernier étant déterminé classiquement, comme cela est bien connu de l'Homme du métier.

Pour les catalyseurs A3, AA3, E3 la teneur cible en trioxyde de molybdène est de 4,5% poids, celle en oxyde de nickel est de 1,1% poids, et celle du pentaoxyde de phosphore est de 1,5% poids. Le rapport atomique P/Mo est égal à 0,67 et le rapport atomique Ni/Mo est égal à 0,49. Les concentrations en solutions ont donc été ajustées pour satisfaire à cette cible, en tenant compte du volume de reprise en eau des différents supports, ce dernier étant déterminé classiquement, comme cela est bien connu de l'Homme du métier.

Les différents catalyseurs préparés ci-avant ont tous été évalués suivant la méthodologie de test décrite dans l'exemple 5.

Tableau 12 : Performances HDS, HDM et HDX des catalyseurs A1, AA1, E1, A2, AA2, E2, A3, AA3 et E3

| Catalyseurs | HDS (%) | HDM (%) |
|---|---|---|
| **A1 (selon l'invention)** | **47,3** | **81,2** |
| **AA1 (selon l'invention)** | **43,8** | **81,1** |
| E1 (comparatif) | 51,4 | 76,5 |
| **A2 (selon l'invention)** | **48,9** | **81,6** |
| **AA2 (selon l'invention)** | **46,3** | **81,4** |
| E2 (comparatif) | 53,9 | 74,5 |
| **A3 (selon l'invention)** | **45,8** | **82,7** |
| **AA3 (selon l'invention)** | **42,4** | **82,4** |
| E3 (comparatif) | 48,2 | 78,7 |

Les performances obtenues sur les catalyseurs A2, AA2, et A3, AA3 indiquent que la combinaison des propriétés texturales des supports A et AA avec différentes formulations catalytiques comme revendiqué dans la présente demande d'invention permet systématiquement de maximiser les performances en hydrodémétallation HDM par rapport à une même formulation déposée sur un support aux propriétés texturales différentes, et notamment décrite dans l'art antérieur. Le niveau de performances en hydrodémétallation HDM atteint est notamment systématiquement supérieur à celui atteignable en utilisant les supports et formulations de l'art antérieur.

D'autre part, en hydrodésulfuration HDS, le déficit d'activité est faible et peu significatif.

**Exemple 11 : Évaluation en stabilité sur une durée de 3000 heures (environ 4 mois)**

Le catalyseur selon l'invention A1, ainsi que le catalyseur comparatif E1 ont été évalués en hydrodémétallation durant 3 000 heures sur la charge n°2 du tableau 5 en maintenant une cible de 30 ppm de métaux (Ni et V cumulés) dans l'effluent. Pour ce faire la température a été progressivement augmentée avec le temps pour compenser la désactivation. Les autres conditions opératoires ont été maintenues fixes durant tout le test, soient une pression totale de 150 bar (15 MPa), 0,8 $h^{-1}$ et 1 200 std $I._{H2}/I._{charge}$.

Après 0,5 mois, on confirme un gain d'environ 2°C sur l'activité en hydrodémétallation HDM du catalyseur A1 par rapport au catalyseur E1. En contrepartie, un déficit en hydrodésulfuration HDS est observé, mais reste jugé faible, l'objectif premier du catalyseur selon l'invention étant d'achever un taux d'hydrodémétallation HDM le plus élevé possible à une température donnée avec la plus grande stabilité dans le temps.

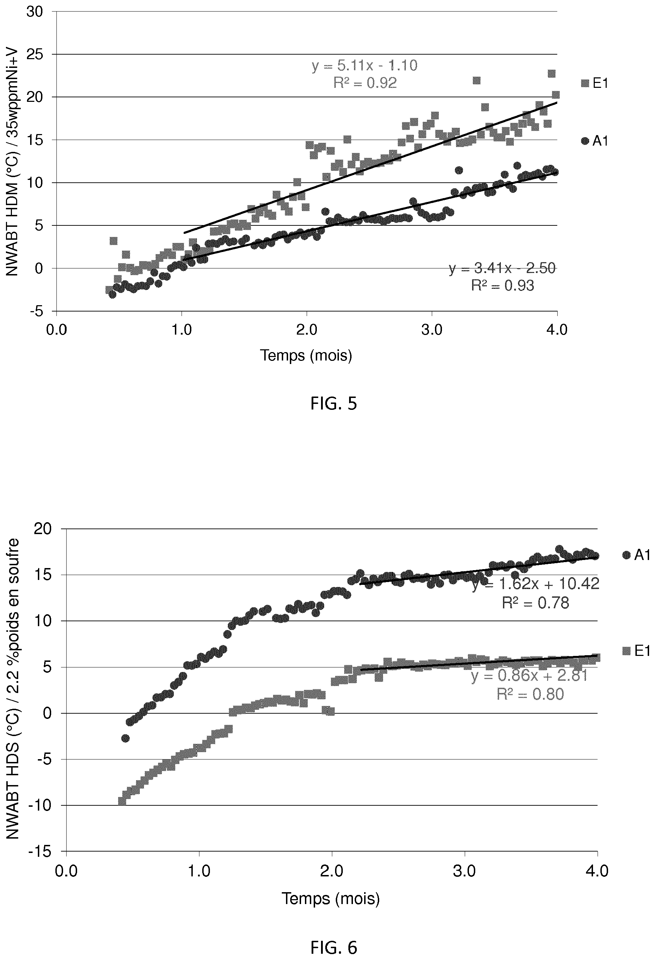

Sur les 4 mois d'essais réalisés, la désactivation affichée est estimée à 3,4 °C/mois pour le catalyseur A1 alors que celle-ci est de 5,1°C/mois pour le catalyseur comparatif E1 (Figure 5). Cet écart correspond à un gain de durée de cycle de 50 % relatif, ce qui est d'intérêt considérable pour le raffineur.

La teneur en soufre en sortie d'unité est supérieure à celle observée avec le catalyseur de référence E1. Toutefois, la désactivation est faible (1,6°C/mois, Figure 6), ce qui permet de préserver une température de fonctionnement faible et en accord avec les contraintes du raffineur.

**Exemple 12 : Évaluation des propriétés mécaniques des solides selon l'invention et comparaison avec celles des solides de l'art antérieur**

Les propriétés mécaniques des catalyseurs A1, et E1 ont été évaluées par un test de résistance mécanique (EGG) selon la norme ASTM D6175. Leur résistance mécanique moyenne est de 0.9 daN/mm pour le catalyseur A1, ce qui est satisfaisant pour les applications considérées et supérieur à ce qui peut être observé pour d'autres catalyseurs de l'art antérieur, comme E1 qui présente un EGG égal à 0.8 daN/mm.

**Revendications**

1. Procédé de préparation d'un catalyseur d'hydroconversion comprenant :

- un support oxyde majoritairement aluminique calciné comportant une teneur en alumine supérieure ou égale à 90% poids et une teneur en silice en équivalant $SiO_2$ d'au plus 10% poids par apport à l'oxyde final ;
- une phase active hydro-déshydrogénante comprenant du molybdène, la teneur en molybdène, mesurée par fluorescence des rayons X, étant comprise entre 2 et 10% poids de trioxyde de molybdène par rapport au poids total du catalyseur, éventuellement au moins un métal du groupe VIII de la classification périodique des éléments choisi parmi le cobalt et/ou le nickel, éventuellement du phosphore,
ledit catalyseur présentant :

- une surface spécifique Sbet supérieure ou égale à 100 m$^2$/g,
- un volume poreux total mesuré par porosimétrie au mercure supérieur ou égal à 0,75 ml/g,
- un diamètre médian mésoporeux en volume tel que mesuré par intrusion au porosimètre à mercure compris entre 18 nm et 26 nm,
- un volume mésoporeux tel que mesuré par intrusion au porosimètre à mercure, supérieur ou égal à 0,65 ml/g,
- un diamètre médian macroporeux en volume tel que mesuré par intrusion au porosimètre à mercure compris entre 100 et 1200 nm, bornes incluses ;
- un volume macroporeux tel que mesuré par intrusion au porosimètre à mercure compris entre 15 et 40 % du volume poreux total ; ledit volume mésoporeux, le volume poreux total et le volume macroporeux étant mesurés par porosité au mercure selon la norme ASTM D4284-83 ;
ledit procédé comprenant au moins les étapes suivantes :

a) Une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes, et dans lequel le précurseur acide de l'étape a) est introduit en quantité correspondant à 0,5 à 4 % poids de l'alumine totale formée à l'issue de l'étape c);
b) Une étape d'ajustement du pH par ajout dans la suspension obtenue à l'étape a) d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes ;
c) Une étape de coprécipitation de la suspension obtenue à l'issue de l'étape b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L ;

d) une étape de filtration de la suspension obtenue à l'issue de l'étape c) de coprécipitation pour obtenir un gel d'alumine ;

e) une étape de séchage dudit gel d'alumine obtenu à l'étape d) pour obtenir une poudre,

f) une étape de mise en forme de la poudre obtenue à l'issue de l'étape e) pour obtenir un matériau cru,

g) une étape de traitement thermique du matériau cru obtenu à l'issue de l'étape f) à une température comprise entre 500 et 1000°C, en présence ou non d'un flux d'air contenant jusqu'à 60% en volume d'eau, pour obtenir un support oxyde aluminique ;

h) une étape d'imprégnation de la phase active hydro-déshydrogénante sur ledit support oxyde aluminique.

2. Procédé selon la revendication 1 dans lequel la concentration en alumine de la suspension de gel d'alumine obtenue à l'étape c) est comprise entre 13 et 35 g/l.

3. Procédé selon la revendication 2 dans lequel la concentration en alumine de la suspension de gel d'alumine obtenue à l'étape c) est comprise entre 15 et 33 g/l.

4. Procédé selon l'une des revendications 1 à 3 dans lequel dans les étapes a), b), c) le milieu réactionnel aqueux est de l'eau et lesdites étapes opèrent sous agitation, en l'absence d'additif organique.

5. Catalyseur d'hydroconversion mésoporeux et macroporeux susceptible d'être préparé par le procédé selon l'une des revendications 1 à 4 présentant :

- une surface spécifique Sbet supérieure à 110 m$^2$/g,
- un diamètre médian mésoporeux en volume tel que mesuré par intrusion au porosimètre à mercure compris entre 18 nm et 26 nm,
- un diamètre médian macroporeux en volume tel que mesuré par intrusion au porosimètre à mercure compris entre 100 et 1200 nm, bornes incluses
- un volume mésoporeux tel que mesuré par intrusion au porosimètre à mercure, supérieur ou égal à 0,70 ml/g
- un volume poreux total mesuré par porosimétrie au mercure supérieur ou égal à 0,85 ml/g,
- un volume macroporeux tel que mesuré par intrusion au porosimètre à mercure compris entre 20 et 30 % du volume poreux total
- une absence de micropores.

6. Catalyseur d'hydroconversion mésoporeux et macroporeux selon la revendication 5 présentant un diamètre médian mésoporeux en volume déterminé par intrusion au porosimètre à mercure compris entre 19 et 25 nm et un diamètre médian macroporeux en volume tel que mesuré par intrusion au porosimètre à mercure compris entre 110 et 1000 nm, bornes incluses.

7. Catalyseur d'hydroconversion selon l'une des revendications 5 ou 6 dans lequel la teneur en molybdène est comprise entre 2 et 10% poids de trioxyde de molybdène par rapport à la masse totale du catalyseur, la teneur en métal du groupe VIII choisi parmi le nickel et/ou le cobalt est comprise entre 0,0 et 3,6 % en poids de l'oxyde de nickel et/ou de cobalt par rapport à la masse totale du catalyseur, la teneur en élément phosphore est comprise entre 0 à 5% en poids de pentoxyde de phosphore par rapport à la masse totale du catalyseur.

8. Catalyseur d'hydroconversion selon la revendication 7 dans lequel la phase active hydro-déshydrogénante comprend également du phosphore.

9. Procédé d'hydrotraitement d'une charge hydrocarbonée lourde choisie parmi les résidus atmosphériques, les résidus sous vide issus de la distillation directe, les huiles désasphaltées, les résidus issus des procédés de conversions tels que par exemple ceux provenant du coking, d'une hydroconversion en lit fixe, en lit bouillonnant ou encore en lit mobile, pris seuls ou en mélange, comprenant la mise en contact de ladite charge avec de l'hydrogène et un catalyseur d'hydroconversion selon l'une des revendications 4 à 8.

10. Procédé d'hydrotraitement selon la revendication 9 réalisé en lit bouillonnant à une température comprise entre 320 et 450°C, sous une pression partielle d'hydrogène comprise entre 3 MPa et 30 MPa, à une vitesse spatiale avantageusement comprise entre 0,1 et 10 volumes de charge par volume de catalyseur et par heure, et avec un rapport hydrogène gazeux sur charge liquide d'hydrocarbures avantageusement compris entre 100 et 3000 normaux mètres cubes par mètres cubes.

11. Procédé d'hydrotraitement selon la revendication 9 réalisé en lit fixe à une température comprise entre 320°C et 450°C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.

12. Procédé d'hydrotraitement d'une charge hydrocarbonée lourde de type résidus en lit fixe selon la revendication 11 comprenant au moins :

a) une étape d'hydrodémétallation ;
b) une étape d'hydrodésulfuration ;

dans lequel ledit catalyseur d'hydroconversion est utilisé dans au moins une desdites étapes a) et b).

13. Procédé d'hydrotraitement de charge hydrocarbonée lourde de type résidus en lit fixe selon la revendication 11 dans lequel ledit catalyseur d'hydroconversion est utilisé dans les premiers lits catalytiques de l'étape d'hydrodémétallation a).

14. Procédé d'hydrotraitement de charge hydrocarbonée lourde en lit bouillonnant selon la revendication 10 dans lequel la charge a une teneur cumulée en métaux supérieure ou égale à 50 ppm et ledit catalyseur d'hydroconversion est utilisé pour les réactions d'hydrodémétallation.

**Patentansprüche**

1. Verfahren zur Herstellung eines Katalysators zur Hydrokonversion, umfassend:

- einen kalzinierten Oxidträger, der überwiegend aus Aluminiumoxid besteht, umfassend einen Aluminiumoxidgehalt von größer oder gleich 90 Gew.-% und einen Siliziumdioxidgehalt als $SiO_2$-Äquivalent von höchstens 10 Gew.-%, bezogen auf das Oxidendprodukt;
- eine aktive Hydrier-/Dehydrierphase, umfassend Molybdän, wobei der Gehalt an Molybdän, gemessen mittels Röntgenfluoreszenzstrahlung, im Bereich zwischen 2 und 10 Gew.-% Molybdäntrioxid, bezogen auf das Gesamtgewicht des Katalysators, liegt, gegebenenfalls mindestens ein Metall der Gruppe VIII des Periodensystems der Elemente, ausgewählt aus Kobalt und/oder Nickel, gegebenenfalls Phosphor,

wobei der Katalysator aufweist:

- eine spezifische Oberfläche Sbet größer oder gleich 100 m$^2$/g,
- ein Gesamtporenvolumen, gemessen mittels Quecksilberporosimetrie, größer oder gleich 0,75 ml/g,
- einen volumenmittleren Mesoporendurchmesser, gemessen mittels Quecksilber-Intrusionsporosimetrie, im Bereich zwischen 18 nm und 26 nm,
- ein Mesoporenvolumen, gemessen mittels Quecksilber-Intrusionsporosimetrie, größer oder gleich 0,65 ml/g,
- einen volumenmittleren Makroporendurchmesser, gemessen mittels Quecksilber-Intrusionsporosimetrie, im Bereich zwischen einschließlich 100 nm und einschließlich 1.200 nm,
- ein Makroporenvolumen, gemessen mittels Quecksilber-Intrusionsporosimetrie, im Bereich zwischen 15 und 40 % des Gesamtporenvolumens; wobei das Mesoporenvolumen, des Gesamtporenvolumen und das Makroporenvolumen mittels Quecksilberporosimetrie gemäß der Norm ASTM D4284-83 gemessen werden;

wobei das Verfahren mindestens die folgenden Schritte umfasst:

a) einen Schritt zum Solubilisieren einer sauren Aluminiumvorstufe, ausgewählt aus Aluminiumsulfat, Aluminiumchlorid und Aluminiumnitrat, in Wasser, bei einer Temperatur im Bereich zwischen 20 und 90 °C, bei einem pH-Wert im Bereich zwischen 0,5 und 5, für eine Dauer im Bereich zwischen 2 und 60 Minuten, und wobei die saure Vorstufe aus Schritt a) in einer Menge eingeführt wird, die 0,5 bis 4 Gew.-% des gesamten Aluminiumoxids, das am Ende von Schritt c) gebildet ist, entspricht;

b) einen Schritt zum Einstellen des pH-Werts durch Zugeben zu der Suspension, die in Schritt a) erhalten wurde, mindestens einer basischen Vorstufe, ausgewählt aus Natriumaluminat, Kaliumaluminat, Ammoniak, Natriumhydroxid und Kaliumhydroxid, bei einer Temperatur im Bereich zwischen 20 und 90 °C, und bei einem pH-Wert im Bereich zwischen 7 und 10, für eine Dauer im Bereich zwischen 5 und 30 Minuten;

c) einen Schritt zum Ausfällen der Suspension, die am Ende von Schritt b) erhalten wird, durch Zugeben zu der Suspension mindestens einer basischen Vorstufe, ausgewählt aus Natriumaluminat, Kaliumaluminat, Ammoniak, Natriumhydroxid und Kaliumhydroxid, und mindestens einer sauren Vorstufe, ausgewählt aus Aluminiumsulfat, Aluminiumchlorid, Aluminiumnitrat, Schwefelsäure, Salzsäure und Salpetersäure, wobei mindestens eine der basischen oder sauren Vorstufen Aluminium umfasst, wobei der relative Durchfluss der sauren und basischen Vorstufen so ausgewählt ist, dass ein pH-Wert des Reaktionsmediums im Bereich zwischen 7 und 10 erhalten wird, und wobei der Durchfluss der sauren und basischen Vorstufe(n), die Aluminium enthalten, so reguliert ist, dass eine Aluminiumoxidendkonzentration in der Suspension im Bereich zwischen 10 und 38 g/l erhalten wird,

d) einen Schritt zum Filtrieren der Suspension, die am Ende von Schritt c) zur zweiten Co-Ausfällung erhalten wird, um ein Aluminiumoxidgel zu erhalten;

e) einen Schritt zum Trocknen des Aluminiumoxidgels, das in Schritt d) erhalten wird, um ein Pulver zu erhalten,

f) einen Schritt zum Formen des Pulvers, das am Ende von Schritt e) erhalten wird, um ein Rohmaterial zu erhalten;

g) einen Schritt zur Wärmebehandlung des Rohmaterials, das am Ende von Schritt f) erhalten wird, bei einer Temperatur im Bereich zwischen 500 und 1.000 °C mit oder ohne Luftstrom, der bis zu 60 Vol.-% Wasser enthält, um einen Aluminiumoxidträger zu erhalten;

h) einen Schritt zum Imprägnieren der aktiven Hydrier-/Dehydrierphase auf den Aluminiumoxidträger.

2. Verfahren nach Anspruch 1, wobei die Aluminiumoxidkonzentration der Aluminiumoxidgelsuspension, die in Schritt c) erhalten wird, im Bereich zwischen 13 und 35 g/l liegt.

3. Verfahren nach Anspruch 2, wobei die Aluminiumoxidkonzentration der Aluminiumoxidgelsuspension, die in Schritt c) erhalten wird, im Bereich zwischen 15 und 33 g/l liegt.

4. Verfahren nach einem der Ansprüche 1 bis 3, wobei in den Schritten a), b), c) das wässrige Reaktionsmedium Wasser ist und wobei die Schritte unter Rühren in Abwesenheit eines organischen Zusatzstoffs durchgeführt werden.

5. Mesoporöser und makroporöser Hydrokonversionskatalysator, der nach dem Verfahren nach einem der Ansprüche 1 bis 4 hergestellt werden kann, aufweisend:

   - eine spezifische Oberfläche Sbet größer als 110 $m^2$/g,
   - einen volumenmittleren Mesoporendurchmesser, gemessen mittels Quecksilber-Intrusionsporosimetrie, im Bereich zwischen 18 nm und 26 nm,
   - einen volumenmittleren Makroporendurchmesser, gemessen mittels Quecksilber-Intrusionsporosimetrie, im Bereich zwischen einschließlich 100 nm und einschließlich 1.200 nm,
   - ein Mesoporenvolumen, gemessen mittels Quecksilber-Intrusionsporosimetrie, größer oder gleich 0,70 ml/g,
   - ein Gesamtporenvolumen, gemessen mittels Quecksilberporosimetrie, größer oder gleich 0,85 ml/g,
   - ein Makroporenvolumen, gemessen mittels Quecksilber-Intrusionsporosimetrie, im Bereich zwischen 20 und 30 % des Gesamtporenvolumens
   - ohne Mikroporen.

6. Mesoporöser und makroporöser Hydrokonversionskatalysator nach Anspruch 5, aufweisend einen volumenmittleren Mesoporendurchmesser, bestimmt mittels Quecksilber-Intrusionsporosimetrie, im Bereich zwischen 19 und 25 nm und einen volumenmittleren Makroporendurchmesser, gemessen mittels Quecksilber-Intrusionsporosimetrie, im Bereich zwischen einschließlich 110 und einschließlich 1.000 nm.

7. Hydrokonversionskatalysator nach einem der Ansprüche 5 oder 6, wobei der Gehalt an Molybdän im Bereich zwischen 2 und 10 Gew.-% Molybdäntrioxid, bezogen auf das Gesamtgewicht des Katalysators, liegt, der Gehalt an Metall der Gruppe VIII, ausgewählt aus Nickel und/oder Kobalt im Bereich zwischen 0,0 und 3,6 Gew.-% Nickel- und/oder Kobaltoxid, bezogen auf das Gesamtgewicht des Katalysators, liegt, der Gehalt an dem Element Phosphor im Bereich zwischen 0 bis 5 Gew.-% Phosphorpentoxid, bezogen auf das Gesamtgewicht des Katalysators, liegt.

8. Hydrokonversionskatalysator nach Anspruch 7, wobei die aktive Hydrier-/Dehydrierphase auch Phosphor umfasst.

9. Verfahren zur Hydroraffination eines schweren KohlenwasserstoffEinsatzmaterials, ausgewählt aus atmosphärischen Rückständen, Vakuumrückständen aus der Direktdestillation, entasphaltierten Ölen, Rückständen aus Konversionsverfahren, wie zum Beispiel jenen, die aus der Verkokung, einer Hydrokonversion im Festbett, im Wirbelbett oder auch in einem Bewegtbett, allein oder als Gemisch, umfassend das Inkontaktbringen des Einsatzmaterials mit Wasserstoff und einem Hydrokonversionskatalysator nach einem der Ansprüche 4 bis 8.

10. Verfahren zur Hydroraffination nach Anspruch 9, das im Wirbelbett bei einer Temperatur im Bereich zwischen 320 und 450 °C, unter einem Wasserstoffpartialdruck im Bereich zwischen 3 MPa und 30 MPa, bei einer Raumgeschwindigkeit, vorteilhafterweise im Bereich zwischen 0,1 und 10 Volumenteilen Einsatzmaterial pro Volumenteil Katalysator und pro Stunde, und mit einem Verhältnis von gasförmigem Wasserstoff zu flüssigem Kohlenwasserstoffeinsatzmaterial, vorteilhafterweise im Bereich zwischen 100 und 3.000 Normkubikmeter pro Kubikmeter durchgeführt wird.

11. Verfahren zur Hydroraffination nach Anspruch 9, das im Festbett bei einer Temperatur im Bereich zwischen 320 °C und 450 °C, unter einem Wasserstoffpartialdruck im Bereich zwischen 3 MPa und 30 MPa, bei einer Raumgeschwindigkeit im Bereich zwischen 0,05 und 5 Volumenteilen Einsatzmaterial pro Volumenteil Katalysator und pro Stunde, und mit einem Verhältnis von gasförmigem Wasserstoff zu flüssigem Kohlenwasserstoffeinsatzmaterial im Bereich zwischen 200 und 5.000 Normkubikmeter pro Kubikmeter durchgeführt wird.

12. Verfahren zur Hydroraffination eines schweren Kohlenwasserstoffeinsatzmaterials vom Typ Festbett-Rückstände nach Anspruch 11, umfassend mindestens:

    a) einen Schritt zur Hydrodemetallisierung;
    b) einen Schritt zur Hydrodesulfurierung;

    wobei der Hydrokonversionskatalysator in mindestens einem der Schritte a) und b) verwendet wird.

13. Verfahren zur Hydroraffination eines schweren Kohlenwasserstoffeinsatzmaterials vom Typ Festbettrückstände nach Anspruch 11, wobei der Hydrokonversionskatalysator in den ersten Katalysebetten des Schritts zur Hydrodemetallisierung a) verwendet wird.

14. Verfahren zur Hydroraffination eines schweren Kohlenwasserstoffeinsatzmaterials im Wirbelbett nach Anspruch 10, wobei das Einsatzmaterial einen Gesamtgehalt an Metall von größer oder gleich 50 ppm aufweist und wobei der Hydrokonversionskatalysator für die Hydrodemetallisierungsreaktionen verwendet wird.

**Claims**

1. Process for the preparation of a hydroconversion catalyst comprising:

    - a calcined, predominantly alumina, oxide support comprising a content of alumina greater than or equal to 90% and a content of silica as $SiO_2$ equivalent of at most 10% with respect to the final oxide;
    - a hydro-dehydrogenating active phase comprising molybdenum, the content of metal molybdenum, measured by X-ray fluorescence, is between 2 and 10 wt. % of trioxide of molybdenum with respect to the total mass of the catalyst, optionally at least one metal of group VIII of the periodic table selected from nickel and/or cobalt, optionally phosphorus,
    said catalyst having:

    - a specific surface area Sbet greater than or equal to 100 $m^2$/g,
    - a total pore volume measured by mercury porosimetry greater than or equal to 0.75 ml/g,
    - a median mesopore diameter by volume, measured by mercury intrusion porosimetry, between 18 nm and 26 nm,
    - a mesopore volume as measured with a mercury intrusion porosimeter greater than or equal to 0.65 ml/g,
    - a median macropore diameter measured by mercury intrusion porosimetry between 100 and 1200 nm ;
    - a macropore volume, measured by mercury intrusion porosimetry, ,comprised between 15 and 40% of the total pore volume; said mesopore volume, said total pore volume and said macropore volume being measured by mercury intrusion porosimetry according to ASTM standard D4284-83 ;
    said process comprising at least the following stages:

a) A stage of dissolution of an acidic aluminium precursor selected from aluminium sulphate, aluminium chloride and aluminium nitrate in water, at a temperature comprised between 20 and 90°C, at a pH comprised between 0.5 and 5, for a duration comprised between 2 and 60 minutes and in which the acidic precursor of stage a) is introduced in a quantity corresponding to 0.5 to 4% by weight of the total alumina formed at the end of stage c).;

b) A stage of pH adjustment by adding, to the suspension obtained in stage a), at least one basic precursor selected from sodium aluminate, potassium aluminate, ammonia, sodium hydroxide and potassium hydroxide, at a temperature comprised between 20 and 90°C, and at a pH comprised between 7 and 10, for a duration comprised between 5 and 30 minutes;

c) A stage of co-precipitation of the suspension obtained at the end of stage b) by adding, to the suspension, at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, at least one of the basic or acidic precursors comprising aluminium, the relative flow rate of the acidic and basic precursors being selected so as to obtain a pH of the reaction medium comprised between 7 and 10 and the flow rate of the acidic and basic precursor or precursors containing aluminium being controlled so as to obtain a final alumina concentration in the suspension comprised between 10 and 38 g/L;

d) a stage of filtration of the suspension obtained at the end of the co-precipitation stage c) in order to obtain an alumina gel;

e) a stage of drying said alumina gel obtained in stage d) in order to obtain a powder,

f) a stage of forming the powder obtained at the end of stage e) in order to obtain a crude material,

g) a stage of thermal treatment of the crude material obtained at the end of stage f) at a temperature comprised between 500 and 1000°C, in the presence or absence of an air flow containing up to 60% by volume of water, in order to obtain an alumina oxide support;

h) a stage of impregnation of the hydro-dehydrogenating active phase on said alumina oxide support.

2. Process according to claim 1, wherein the alumina concentration of the suspension of alumina gel obtained in stage c) is comprised between 13 and 35 g/l.

3. Process according to claim 2, wherein the alumina concentration of the suspension of alumina gel obtained in stage c) is comprised between 15 and 33 g/l.

4. Process according to one of claims 1 to 3 in which, in stages a), b), c), the aqueous reaction medium is water and said stages are carried out with stirring, in the absence of organic additive.

5. Mesoporous and macroporous hydroconversion catalyst obtainable according to the process according to claims 1 to 4 having:

- a specific surface area Sbet greater than 110 $m^2/g$,
- a median mesopore diameter by volume measured by mercury intrusion porosimeter comprised between 18 nm and 26 nm,
- a median macropore diameter by volume measured by mercury intrusion porosimeter comprised between 100 and 1200 nm inclusive,
- a mesopore volume as measured with a mercury intrusion porosimeter greater than or equal to 0.70 ml/g
- a total pore volume measured by mercury porosimetry greater than or equal to 0.85 ml/g,
- a macropore volume measured by mercury intrusion porosimeter comprised between 20 and 30% of the total pore volume,
- absence of micropores.

6. Mesoporous and macroporous hydroconversion catalyst according claim 5, having a median mesopore diameter by volume determined with a mercury intrusion porosimeter comprised between 19 and 25 nm and a median macropore diameter by volume measured by mercury intrusion porosimeter comprised between 110 and 1000 nm inclusive.

7. Hydroconversion catalyst according to one of claims 5 or 6, in which the molybdenum content is comprised between 2 and 10% by weight of trioxide of molybdenum relative to the total weight of the catalyst, the group VIII selected from nickel and/or cobalt metal content is comprised between 0.0 and 3.6% by weight of the oxide of nickel and/or cobalt metal relative to the total weight of the catalyst, the content of the element phosphorus is comprised between 0 and 5% by weight of phosphorus pentoxide relative to the total weight of the catalyst.

8. Hydroconversion catalyst according to claim 7, in which the hydro-dehydrogenating active phase also comprises phosphorus.

9. Process for hydrotreating a heavy hydrocarbon feedstock selected from atmospheric residues, vacuum residues obtained from direct distillation, deasphalted oils, residues originating from conversion processes such as for example those originating from coking, from fixed-bed, ebullating-bed or moving-bed hydroconversion, used alone or in a mixture, comprising bringing said feedstock into contact with hydrogen and a hydroconversion catalyst according to one of claims 4 to 8.

10. Hydrotreating process according to claim 9, carried out in an ebullating bed at a temperature comprised between 320 and 450°C, under a hydrogen partial pressure comprised between 3 MPa and 30 MPa, at a space velocity advantageously comprised between 0.1 and 10 volumes of feedstock per volume of catalyst per hour, and with a ratio of gaseous hydrogen to liquid hydrocarbon feedstock advantageously comprised between 100 and 3000 normal cubic metres per cubic metre.

11. Hydrotreating process according to claim 9 or, carried out in a fixed bed at a temperature comprised between 320°C and 450°C, under a hydrogen partial pressure comprised between 3 MPa and 30 MPa, at a space velocity comprised between 0.05 and 5 volumes of feedstock per volume of catalyst per hour, and with a ratio of gaseous hydrogen to liquid hydrocarbon feedstock comprised between 200 and 5000 normal cubic metres per cubic metre.

12. Process for hydrotreating heavy hydrocarbon residue type feeds in fixed bed according to claim 11 comprising at least:

    a) a stage of hydrodemetallization;
    b) a stage of hydrodesulphurization;

    in which said hydroconversion catalyst is used in at least one of said stages a) and b).

13. Process for hydrotreating heavy hydrocarbon feedstock of the residue type feeds in a fixed bed according to claim 11, wherein said hydroconversion catalyst is used in the first catalyst beds of the hydrodemetallization stage a).

14. Process for hydrotreating heavy hydrocarbon feedstock in an ebullating bed according to claim 10, wherein the feedstock has a cumulative metals content greater than or equal to 50 ppm and said hydroconversion catalyst is used for the reactions of hydrodemetallization.

FIG. 1

FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5221656 A
- US 5089463 A
- US 7119045 B
- US 6589908 B
- US 4818743 A
- US 6332976 B
- WO 2010002699 A
- US 5968348 A
- US 6780817 B
- US 6919294 B
- US 4976848 A
- US 7169294 B
- WO 2004052534 A1
- EP 2255873 A
- WO 2005028106 A
- US 7790652 B
- WO 2012021386 A
- US 7790562 B

**Littérature non-brevet citée dans la description**

- **M.S. RANA et al.** *Fuel,* 2007, vol. 86, 1216
- *The Journal of American Society,* 1938, vol. 60, 309
- **JEAN CHARPIN ; BERNARD RASNEUR.** *Techniques de l'ingénieur, traité analyse et caractérisation,* 1050-5
- **F. ROUQUÉROL ; J. ROUQUÉROL ; K. SING.** Adsorption by powders and porous solids. Principles, methodology and applications. Academic Press, 1999
- CRC Handbook of Chemistry and Physics. 2000
- *The journal of the American Chemical Society,* 1938, vol. 60, 309
- **ASEP BAYU DANI NANDIYANTO ; KIKUO OKUYAMA.** *Advanced Powder Technology,* 2011, vol. 22, 1-19